(19) Europäisches Patentamt
European Patent Office
Office européen des brevets

(11) EP 2 073 301 B1

(12) **EUROPEAN PATENT SPECIFICATION**

(45) Date of publication and mention of the grant of the patent:
**07.12.2011 Bulletin 2011/49**

(21) Application number: **07829591.2**

(22) Date of filing: **11.10.2007**

(51) Int Cl.:
***H01M 10/0565*** *(2010.01)* ***C08F 230/06*** *(2006.01)*

(86) International application number:
**PCT/JP2007/069853**

(87) International publication number:
**WO 2008/044735 (17.04.2008 Gazette 2008/16)**

(54) **ION CONDUCTING POLYMER ELECTROLYTE AND SECONDARY BATTERY USING THE SAME**

IONENLEITENDES POLYMERELEKTROLYT UND SEKUNDÄRBATTERIE DAMIT

ÉLECTROLYTE POLYMÈRE CONDUCTEUR IONIQUE ET BATTERIE SECONDAIRE L'UTILISANT

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **12.10.2006 JP 2006279233**
**30.03.2007 JP 2007094754**

(43) Date of publication of application:
**24.06.2009 Bulletin 2009/26**

(73) Proprietor: **NOF Corporation**
**20-3 Ebisu 4-chome, Shibuya-ku**
**Tokyo 150-6019 (JP)**

(72) Inventors:
- **ITO, Tetsuya**
  **Nanagawa 210-0865 (JP)**
- **TOKUNAKA, Takeshi**
  **Nanagawa 210-0865 (JP)**
- **MIZUTANI, Masato**
  **Nanagawa 210-0865 (JP)**
- **ICHIMIYA, Kengo**
  **Nanagawa 210-0865 (JP)**

(74) Representative: **HOFFMANN EITLE**
**Patent- und Rechtsanwälte**
**Arabellastraße 4**
**81925 München (DE)**

(56) References cited:
**EP-A1- 1 160 268**
**EP-A1- 1 428 849**
**EP-A1- 1 431 300**
**WO-A1-2006/009284**
**JP-A- 02 248 928**
**JP-A- 2001 072 875**
**JP-A- 2001 072 877**
**JP-A- 2003 201 344**
**US-A1- 2004 101 758**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 073 301 B1

## Description

TECHNICAL FIELD

The present invention relates to an ion-conductive polymer electrolyte and a secondary battery employing the same.

BACKGROUND ART

Recently, the desire of the market for performance/function advancement or size/weight/thickness reduction in various electronic/electrical appliances has grown considerably. For realizing such desires, batteries as energy-supplying devices are required to have a higher energy density and a higher output density.

Because of this, the replacement of conventional lead storage batteries, nickel-cadmium batteries, and nickel-hydrogen batteries by lithium ion secondary batteries, which have a higher energy density and a higher output density, is proceeding rapidly.

As the electrolytes of lithium ion secondary batteries, liquid electrolytes prepared by dissolving an electrolytic salt in a nonaqueous solvent such as, e.g., a carbonate are used from the standpoint of ionic conductivity. However, these liquid electrolytes have high volatility and low chemical stability. There is hence a possibility that the batteries might swell when used in a high-temperature environment and, in the worst case, might burst/ignite. Furthermore, especially when an $LiMn_2O_4$-based active material is used in the positive electrode, there is a problem, for example, that the battery capacity deteriorates rapidly due to manganese dissolution.

In order to overcome such problems, gel electrolytes obtained by causing a nonaqueous solvent to gel with a polymer are being developed. As such an attempt, a gel electrolyte constituted of a carbonate solvent and polyethylene glycol diacrylate has, for example, been proposed (for example, patent document 1). The gel electrolyte has the effect of inhibiting the carbonate solvent from volatilizing or deteriorating and, hence, can be expected to reduce the risk of causing those problems to some degree. However, it is necessary to use a nonaqueous solvent in a large amount in order to obtain a practically sufficient ionic conductivity, and the problems have not been fundamentally overcome.

Because of this, in batteries employing the liquid electrolytes or gel electrolytes, the upper-limit use temperatures are about 60°C. However, there are various kinds of electronic/electrical appliances in which the batteries are expected to be replaced by lithium ion secondary batteries, and there is a desire for the development of a lithium ion secondary battery usable in severer temperature environments.

A lithium ion secondary battery employing a polymer electrolyte has been proposed as a measure in eliminating such a problem. Use of a chemically stable polymer electrolyte can greatly inhibit electrolyte volatilization and deterioration as compared with the case where the conventional liquid electrolytes or gel electrolytes are used. It is therefore thought that use of the polymer electrolyte remarkably improves battery safety and reliability in high-temperature environments and, simultaneously therewith, makes it possible to use a lightweight aluminum laminate sheet as a battery case and to simplify the safety device.

Furthermore, polymer electrolytes generally are excellent in moldability and processability and have flexibility. The electrolytes hence make it possible to design a battery which has been difficult to produce with conventional techniques, such as, e.g., a battery which is extremely lightweight and thin and is flexible or a battery having an unusual three-dimensional shape. Technical progress is hence desired.

Widely known as such an attempt is, for example, a polymer electrolyte obtained by incorporating a specific alkali metal salt into a poly(ethylene oxide) polymer (for example, patent document 2). However, this polymer electrolyte has low ionic conductivity and, hence, has had a problem that a battery having practically sufficient output at around ordinary temperature cannot be obtained therewith.

Moreover, a polymer electrolyte for secondary batteries which is constituted of a polymer of a boron-containing polymerizable monomer and poly(ethylene oxide) and a battery employing this polymer electrolyte have been disclosed (for example, patent document 3).

The above polymer electrolyte has satisfactory moldability and processability and excellent ionic conductivity. However, this polymer electrolyte is insufficient in compressive strength for use in application to, e.g., a laminate type battery employing a flexible case. There has also been a problem that the electrolyte considerably decreases in electrical properties in a high-temperature environment and cannot give a battery having high stability and high reliability.

Patent Document 1: JP-A-11-214038 (Abstract)
Patent Document 2: JP-A-2006-134817 (Abstract)
Patent Document 3: JP-A-2002-158039 (Abstract)

DISCLOSURE OF THE INVENTION

PROBLEMS THAT THE INVENTION IS TO SOLVE

Objects of the invention, which has been achieved under the circumstances described above, are to provide an ion-conductive polymer electrolyte for electrochemical device which has low volatility, is excellent in moldability and processability, has high compressive strength, has flexibility, has satisfactory ionic conductivity in a wide temperature range from ordinary to high temperatures, and has satisfactory chemical stability in high-temperature environments and to provide a secondary battery which employs the electrolyte and which has a practically sufficient output in a wide temperature range and has satisfactory safety and reliability in high-temperature environments.

MEANS FOR SOLVING THE PROBLEMS

Namely, the invention provides the following. (A) An ion-conductive polymer electrolyte for electrochemical device which includes a polymer of a polymerizable boron-containing compound represented by formula (1), a high-molecular compound represented by formula (2), and an electrolytic salt.

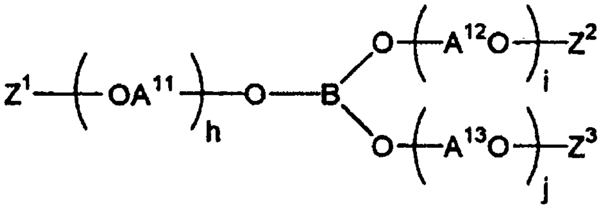

・・・(1)

In the formula, B represents a boron atom; $Z^1$, $Z^2$, and $Z^3$ each independently represent a polymerizable functional group having an unsaturated double bond; $A^{11}O$, $A^{12}O$, and $A^{13}O$ each independently represent an oxyalkylene group having 2-6 carbon atoms; and h, i, and j, which each indicate the average number of moles of the oxyalkylene group added, each independently are 1-10.

$$R^1O\text{-}(A^2O)_k\text{-}R^2 \qquad (2)$$

In the formula, $R^1$ and $R^2$ each independently represent a hydrocarbon group having 1-10 carbon atoms; $A^2O$ represents an oxyalkylene group having 2-6 carbon atoms; k, which indicates the average number of moles of the oxyalkylene group added, is 4-20; and the groups $A^2O$ may be the same or different.

(B) The ion-conductive polymer electrolyte for electrochemical device as described above wherein the ratio by mass of the polymer of a polymerizable boron-containing compound represented by formula (1) to the high-molecular compound represented by formula (2) is in such a range that (mass of the polymer of a polymerizable boron-containing compound represented by formula (1))/(mass of the high-molecular compound represented by formula (2)) is from 5/95 to 60/40.

(C) The ion-conductive polymer electrolyte for electrochemical device as described above wherein $A^{11}O$, $A^{12}O$, and $A^{13}O$ in the polymerizable boron-containing compound represented by formula (1) and $A^2O$ in the high-molecular compound represented by formula (2) each independently are an oxyalkylene group having 2-4 carbon atoms.

(D) The ion-conductive polymer electrolyte for electrochemical device as described above wherein the polymer is a copolymer of the polymerizable boron-containing compound represented by formula (1) and polymerizable compound.

(E) The ion-conductive polymer electrolyte for electrochemical device as described above wherein the polymerizable compound to be copolymerized with the polymerizable boron-containing compound is at least one compound selected from methyl acrylate, methyl methacrylate, acrylonitrile, methacrylonitrile, 4-vinylethylene carbonate, and 4-acryloyloxymethylethylene carbonate.

(F) The ion-conductive polymer electrolyte for electrochemical device as described above wherein h, i, and j in the polymerizable boron-containing compound represented by formula (1) each independently are 1-3.
(G) The ion-conductive polymer electrolyte for electrochemical device as described above wherein k in the high-molecular compound represented by formula (2) is 4-12.
(H) The ion-conductive polymer electrolyte for electrochemical device as described above wherein the high-molecular compound represented by formula (2) has a degree of etherification of 95% or higher.
(I) The ion-conductive polymer electrolyte for electrochemical device as described above characterized by further containing a high-molecular compound represented by formula (3) in the proportion shown below.

$$HO\text{-} (A^3O)_1\text{-}H \qquad (3)$$

In the formula, $A^3O$ represents an oxyalkylene group having 2-6 carbon atoms; 1, which indicates the average number of moles of the oxyalkylene group added, is 1,000-200,000; and the groups $A^3O$ may be the same or different.
The ratio (mass of the high-molecular compound represented by formula (3))/[(mass of the polymer of a polymerizable boron-containing compound represented by formula (1))+(mass of the high-molecular compound represented by formula (2))] is in the range of from 0.01/100 to 10/100.
(J) The ion-conductive polymer electrolyte for electrochemical device as described above wherein the ratio (mass of the high-molecular compound represented by formula (3))/[(mass of the polymer of a polymerizable boron-containing compound represented by formula (1))+(mass of the high-molecular compound represented by formula (2))] is in the range of from 0.01/100 to 7/100.
(K) An ion-conductive polymer electrolyte for electrochemical device which includes the ion-conductive polymer electrolyte for electrochemical device as described above and a reinforcing material combined with the electrolyte.
(L) A secondary battery which includes a positive electrode including a positive active material which intercalates and deintercalates cations, a negative electrode including a negative active material which intercalates and deintercalates the cations released from the positive electrode or a negative electrode constituted of lithium metal or a lithium alloy, and an electrolyte layer which is interposed between the positive electrode and the negative electrode and allows the cations to move therethrough, characterized in that this electrolyte layer is the ion-conductive polymer electrolyte for electrochemical device described above.

## ADVANTAGES OF THE INVENTION

When an ion-conductive polymer electrolyte including a polymer and a high-molecular compound each satisfying the range according to the invention is used, this electrolyte has low volatility, is excellent in moldability and processability, has flexibility, has high compressive strength, has satisfactory ionic conductivity in a wide temperature range from ordinary to high temperatures, and has satisfactory chemical stability in high-temperature environments. A secondary battery employing this electrolyte has a practically sufficient output in a wide temperature range because the boron atoms have the effect of trapping anions. This battery is satisfactory in safety and reliability in high-temperature environments.

## BRIEF DESCRIPTION OF THE DRAWINGS

[Fig. 1] Fig. 1 is a diagrammatic slant view illustrating the structure of the test batteries used in the Examples and Comparative Examples.
[Fig. 2] Fig. 2 is a diagrammatic slant view illustrating the compressed-state charge/discharge test conducted in Examples and Comparative Examples.
[Fig. 3] Fig. 3 is a diagrammatic slant view illustrating the curved-state charge/discharge test conducted in Examples and Comparative Examples.

DESCRIPTION OF THE REFERENCE NUMERALS

1 ... positive electrode, 2 ... negative electrode, 3 ... positive-electrode aluminum terminal, 4... negative-electrode nickel terminal, 5 ... aluminum laminate film, 6 ... Φ10 mm SUS rod, 7 ... Φ100 mm SUS rod, 8 ... aluminum laminate film, 9 ... negative-electrode nickel terminal, 10 ... positive-electrode aluminum terminal, 11 ... metal rod, 12 ... aluminum laminate film, 13 ... negative-electrode nickel terminal, 14 ... positive-electrode aluminum terminal.

BEST MODE FOR CARRYING OUT THE INVENTION

The invention will be explained below in detail.
$Z^1$, $Z^2$, and $Z^3$ in formula (1) each independently are a polymerizable functional group having an unsaturated double bond. Examples thereof include acrylic, methacrylic, vinyl, and allyl. Of these, acrylic or methacrylic is preferred because these groups have high reactivity. $Z^1$, $Z^2$, and $Z^3$ may be different from each other.

$R^1$ and $R^2$ in formula (2) each independently are a hydrocarbon group having 1-10 carbon atoms. Examples thereof include aliphatic hydrocarbon groups such as methyl, ethyl, propyl, butyl, pentyl, hexyl, heptyl, octyl, nonyl, and decyl, aromatic hydrocarbon groups such as phenyl, toluyl, and naphthyl, and alicyclic hydrocarbon groups such as cyclopentyl, cyclohexyl, methylcyclohexyl, and dimethylcyclohexyl. From the standpoint of the ionic conductivity of the ion-conductive polymer electrolyte to be obtained, the hydrocarbon groups having 4 or less carbon atoms are preferred. Especially preferred is methyl.

$A^{11}O$, $A^{12}O$, and $A^{13}O$ in formula (1), $A^2O$ in formula (2), and $A^3O$ in formula (3) each independently are an oxyalkylene group having 2-6 carbon atoms. Examples thereof include oxyethylene, oxypropylene, oxybutylene, and oxytetramethylene. From the standpoint of the ionic conductivity of the ion-conductive polymer electrolyte to be obtained, the oxyalkylene groups having 2-4 carbon atoms are preferred. Especially preferred is oxyethylene or oxypropylene. The oxyalkylene groups may be of one kind only or of two or more kinds, and the oxyalkylene groups in one molecule may be of different kinds. Furthermore, h, i, and j in formula (1) each indicate the average number of moles of the oxyalkylene group added, and each independently are 1-10, preferably 1-3.

Symbol k in formula (2) indicates the average number of moles of the oxyalkylene group added, and is 4-20, preferably 4-12.

In case where k in formula (2) is smaller than 4, the polymer electrolyte to be obtained has reduced chemical stability in high-temperature environments. On the other hand, in case where k is larger than 20, the polymer electrolyte not only has reduced ionic conductivity but has reduced flexibility and hence comes into poor contact with the boundaries of electrodes. Because of this, when this polymer electrolyte is used in a battery, a practically sufficient output is not obtained.

When h, i, and j in formula (1) and k in formula (2) are in those ranges, an ion-conductive polymer electrolyte is obtained which has high chemical stability in high-temperature environments and has a practically sufficient output when used in a battery.

The polymer electrolyte of the invention has practically sufficient compressive strength even when used as the electrolyte constituted of a polymer of a polymerizable boron-containing compound represented by formula (1), a high-molecular compound represented by formula (2), and an electrolyte salt. However, excellent flexibility can be imparted thereto by further incorporating a high-molecular compound represented by formula (3). In addition, the system as a whole comes to have better compatibility and the high-molecular compound represented by formula (2) can be prevented from exuding in high-temperature environments.

As a result, not only the battery to be obtained has improved reliability, but also application to a laminate type battery employing a flexible case or to a similar battery renders the battery flexible.

Symbol 1 in formula (3) indicates the average number of moles of the oxyalkylene group added, and is 1, 000-200, 000, preferably 2,000-150,000.

In case where 1 in formula (3) is smaller than 1,000, there is a tendency that a polymer electrolyte having satisfactory flexibility is not obtained and electrical properties decrease due to the hydroxyl group contained in the high-molecular compound represented by formula (3).

On the other hand, in case where 1 is larger than 200, 000, the polymer electrolyte has reduced ionic conductivity and comes into poor contact with the boundaries of electrodes. Because of this, when this polymer electrolyte is used in a battery, a practically sufficient output is not obtained.

When 1 in formula (3) is within that range, an ion-conductive polymer electrolyte is obtained which has excellent flexibility and compressive strength and has practically sufficient output when used in a battery.

Incidentally, 1 is the value obtained by calculating the viscosity-average molecular weight (Mv) from the intrinsic viscosity (n) at 30˚C of the high-molecular compound represented by formula (3) using the following mathematical expression (1), which is known as the Mark-Houwink equation, and dividing the Mv by the molecular weight of the oxyalkylene group according to the following mathematical expression (2).

$$\eta = 12.5 \times 10^{-5} \times Mv^{0.78} \qquad \text{mathematical expression (1)}$$

$$l = Mv/(\text{molecular weight of oxyalkylene group}) \qquad \text{mathematical expression(2)}$$

The ratio (mass of the high-molecular compound represented by formula (3))/[(mass of the polymer of a polymerizable boron-containing compound represented by formula (1))+(mass of the high-molecular compound represented by formula (2))] is in the range of from 0.01/100 to 10/100, preferably from 0.01/100 to 7/100, more preferably from 0. 01/100 to 5/100. In case where the weight ratio is smaller than 0.01/100, the desired flexibility tends not to be obtained. In case where the ratio exceeds 10/100, there is a tendency that the polymer electrolyte has reduced ionic conductivity and comes into poor contact with the boundaries of electrodes. There are hence cases where use of this polymer electrolyte in a battery does not give a practically sufficient output.

Incidentally, the mass of the polymer of a polymerizable boron-containing compound represented by formula (1), in the case where a copolymer with the polymerizable compound which will be described later (preferably, any of the polymerizable compounds (a) which will be shown later) is used, means the weight including this compound.

The polymerizable boron-containing compound represented by formula (1), which has polymerizable functional groups at the ends, can be produced by known methods and can be produced also by the following method. Namely, a boron compound such as, e.g., boric acid, boric anhydride, or an alkyl borate is added to a monohydric alcohol having a polymerizable functional group, and the internal pressure of the system is reduced at 30-200˚C while passing a dry gas therethrough to convert the alcohol into a boric ester, whereby the target compound can be obtained. More specifically, the reaction mixture is reacted, for example, at a temperature of 50-100˚C with stirring for 2-12 hours at a reduced pressure of 0.67-66.7 kPa (5-500 mmHg) while passing dry air at an appropriate rate and conducting an operation for distilling off the water or volatile matter eliminated, whereby a polymerizable boron-containing compound represented by formula (1) can be obtained.

From the standpoint of reducing the amount of water contained in the polymerizable boron-containing compound to be obtained and from other standpoints, it is preferred to produce the target compound using a trialkyl borate, in particular, trimethyl borate.

The monohydric alcohol having a polymerizable functional group means a compound which has a polymerizable functional group, e.g., an acrylic, methacrylic, vinyl, or allyl group, and a hydroxyl group in the same molecule.

Specific examples thereof include 2-hydroxyethyl (meth)acrylate, 2-hydroxypropyl (meth)acrylate, 2-hydroxybutyl (meth)acrylate,4-hydroxybutyl(meth)acrylate, polyethylene glycol mono(meth)acrylate, polypropylene glycol mono (meth)acrylate, polybutylene glycol mono(meth)acrylate, polytetramethylene glycolmono(meth)acrylate,and polyethylene glycol/polypropylene glycol mono(meth)acrylate. Of these compounds, 2-hydroxyethyl (meth)acrylate and 2-hydroxypropyl (meth) acrylate are preferred from the standpoint of the ionic conductive of the ion-conductive polymer electrolyte to be obtained.

Examples of the boron compound include trialkyl borate compounds such as trimethyl borate, triethyl borate, tripropyl borate, triisopropyl borate, tributyl borate, triisobutyl borate, and tri-t-butyl borate and boron compounds such as boric anhydride, orthoboric acid, metaboric acid, and pyroboric acid. Of these, the trialkyl borate compounds are preferred because the boric ester to be obtained therefrom can be reduced in the content of impurities including water. In particular, trimethyl borate and triethyl borate are more preferred because these are effective in lowering reaction temperature and inhibiting side reactions.

In the case of using a trialkyl borate, it is preferred that the trialkyl borate should be used in an amount of 1.0-10.0 mol per 3.0 mol of the monohydric alcohol having a polymerizable functional group to produce the target compound while distilling off the volatile matter generated by the boric ester formation reaction and the excess trialkyl borate.

The high-molecular compound represented by formula (2), which has a hydrocarbon group at each end, can be produced by known methods and can be produced also by the following method. First, a monohydric alcohol having a hydrocarbon group having 1-10 carbon atoms as a starting material and either an alkali catalyst which is not any of the hydroxides of alkali metals and alkaline earth metals or a Lewis acid catalyst are introduced into a reaction vessel. The system is brought into a pressurized state in a dry nitrogen gas atmosphere. Thereafter, an alkylene oxide is continuously added to the reaction mixture with stirring at 50-150˚C to conduct addition reaction and thereby obtain a poly(alkylene oxide) monoalkyl ether as a raw material. Subsequently, an alkali metal hydroxide such as sodium hydroxide or potassium hydroxide is added to the polyalkylene oxide monoalkyl ether obtained, and an etherification reaction with

a monohalogenated hydrocarbon is conducted, whereby a high-molecular compound represented by formula (2) can be obtained. In this method, the degree of etherification represented by the following mathematical expression (3) is preferably 95% or higher, more preferably 97% or higher, most preferably 98% or higher, from the standpoints of electrolyte stability in high-temperature environments and the reliability of the battery employing the electrolyte.

[1-(hydroxyl value of the high-molecular compound represented by formula (2))/(hydroxyl value of the polyalkylene oxide monoalkyl ether)] × 100    mathematical expression (3)

The hydroxyl values used in mathematical expression (3) are values determined through an examination made in accordance with JIS-K-0070.

The alkali catalyst is a compound which is not any of the hydroxides of alkali metals and alkaline earth metals. Examples thereof include sodium, potassium, sodium potassium amalgams, sodium hydride, sodium methoxide, potassium methoxide, sodium methoxide, and potassium ethoxide. Also usable are a methanol solution of sodium methoxide, an ethanol solution of sodium ethoxide, and the like.

As the Lewis acid catalyst, use can be made of boron trifluoride, tin tetrachloride, or the like.

The monohydric alcohol having a hydrocarbon group having 1-10 carbon atoms is, for example, a compound which has in the same molecule a hydroxyl group and an aliphatic hydrocarbon group, such as methyl, ethyl, propyl, butyl, pentyl, hexyl, heptyl, octyl, nonyl, or decyl, an aromatic hydrocarbon group such as phenyl, toluyl, or naphthyl, an alicyclic hydrocarbon group such as cyclopentyl, cyclohexyl, methylcyclohexyl, or dimethylcyclohexyl, or the like.

The proportion of the polymer of a polymerizable boron-containing compound represented by formula (1) to the high-molecular compound represented by formula (2) is preferably such that the mass ratio (mass of the polymer of a polymerizable boron-containing compound represented by formula (1))/(mass of the high-molecular compound represented by formula (2)) is in the range of from 5/95 to 60/40. The mass ratio is more preferably in the range of from 10/90 to 45/55, especially preferably in the range of from 13/87 to 35/65. In case where the mass ratio is lower than 5/95, the ion-conductive polymer electrolyte film to be obtained tends to have reduced mechanical strength and be difficult to handle. In case where the mass ratio exceeds 60/40, the electrolyte film tends to have poor flexibility and reduced ionic conductivity.

The ion-conductive polymer electrolyte of the invention has practically sufficient compressive strength even when the polymer used is a polymer obtained only from a compound represented by formula (2). Excellent flexibility may be imparted thereto by further incorporating a high-molecular compound represented by formula (3). However, on the supposition of application to a laminate type battery employing a flexible case or a similar battery, there are cases where a high compressive stress is imposed on the battery. When an even higher degree of compressive strength is required in view of such cases, a copolymer of a compound represented by formula (1) and at least one other polymerizable compound may be used as the polymer. In this case, by further incorporating a high-molecular compound represented by formula (3), a polymer electrolyte combining a high degree of compressive strength and excellent flexibility is obtained.

Examples of the polymerizable compound to be copolymerized with the compound represented by formula (1) include the following polymerizable compounds (a).

Examples of the polymerizable compounds (a) include styrene, (meth)acrylonitrile, the (meth)acrylic esters of monohydric alcohols, such as methyl (meth)acrylate, ethyl (meth)acrylate, propyl (meth)acrylate, butyl (meth)acrylate, hexyl (meth)acrylate, cyclohexyl (meth) acrylate, and phenyl (meth) acrylate, (meth)acrylic esters of polyhydric alcohols, such as glycerol 1,3-diacrylate, trimethylolpropane tri(meth)acrylate, and pentaerythritol tetra(meth)acrylate, polyalkylene glycol derivatives such as alkyloxypolyalkylene glycol (meth) acrylates, polyalkyleneglycoldi(meth)acrylates, glycerol tris(polyalkylene glycol) ether trimethacrylates, trimethylolpropane tris(polyalkylene glycol) ether tri (meth) acrylates, and bisphenol Apoly (alkylene oxide) adduct glycidyl ethers, vinylethylene carbonate compounds such as 4-vinylethylene carbonate, 4,4-divinylethylene carbonate, 4,5-divinylethylene carbonate, 4-vinyl-4-methylethylene carbonate, 4-vinyl-5-methylethylene carbonate, and 4-vinyl-4,5-dimethylethylene carbonate, and acryloyloxymethylethylene carbonate compounds such as 4-acryloyloxymethylethylene carbonate, 4,5-acryloyloxymethylethylene carbonate, 4-methyl-4-acryloyloxymethylethylene carbonate, and 4-methyl-5-acryloyloxymethylethylene carbonate. From the standpoint of the ionic conductivity of the ion-conductive polymer electrolyte to be obtained, it is preferred to use methyl acrylate, methyl methacrylate, acrylonitrile, methacrylonitrile, 4-vinylethylene carbonate, or 4-acryloyloxymethylethylene carbonate among those compounds. The polymerizable compounds ($\alpha$) may be used alone or in combination of two or more thereof.

In the case where a copolymer of a compound represented by formula (1) and a polymerizable compound ($\alpha$)

is used as the polymer, the polymerizable compound (α) is included in the mass of the polymer of a polymerizable boron-containing compound represented by formula (1). From the standpoint of the ionic conductivity of the polymer electrolyte to be obtained, the proportion of the polymerizable compound (α) in the copolymer is preferably 80% by weight or lower, more preferably in the range of 5-75% by weight, even more preferably in the range of 10-50% by weight. In case where the proportion of the polymerizable compound (α) exceeds 80% by weight, practically sufficient ionic conductivity tends to be difficult to obtain. In case where the proportion thereof is lower than 5% by weight, a high degree of compressive strength tends to be difficult to obtain.

A high-molecular compound (β) and a nonaqueous solvent may be further added to the ion-conductive polymer electrolyte of the invention so long as this addition is not counter to the spirit of the invention.

The high-molecular compound (β) is not particularly limited so long as it has compatibility with the ion-conductive polymer electrolyte of the invention. Examples thereof include poly(vinylidene fluoride) (PVdF), hexafluoropropylene/acrylonitrile copolymers (PHFP-ANs), styrene/butadiene rubbers (SBRs), carboxymethyl cellulose (CMC), methyl cellulose (MC), ethyl cellulose (EC), and poly(vinyl alcohol) (PVA). Use may also be made of a method in which one or more of the polymerizable compounds (α) enumerated above are polymerized beforehand by bulk polymerization, solution polymerization, emulsion polymerization, or the like and the resultant polymer of the polymerizable compound (s) (α) is employed as the high-molecular compound (β).

The nonaqueous solvent also is not particularly limited so long as it has compatibility with the ion-conductive polymer electrolyte of the invention. Examples thereof include carbonic ester compounds such as ethylene carbonate, propylene carbonate, butylene carbonate, dimethyl carbonate, diethyl carbonate, and methyl ethyl carbonate and cyclic ether compounds such as γ-butyrolactone, tetrahydrofuran, and dioxane. These nonaqueous solvents may be used alone or as a mixture of two or more thereof. Furthermore, known additives for use in lithium secondary batteries, such as, e.g., benzene and vinylene carbonate, may be used.

The ion-conductive polymer electrolyte of the invention, which includes a polymer of a polymerizable boron-containing compound represented by formula (1), a high-molecular compound represented by formula (2), and an electrolyte salt, can be obtained by known methods.

In the case where a copolymer containing a polymerizable compound (α) is used as the polymer, where a high-molecular compound represented by formula (3) is used, where a copolymer containing a polymerizable compound (α) and a high-molecular compound represented by formula (3) are used, or where a high-molecular compound (β) or a nonaqueous solvent is further used, this ion-conductive polymer electrolyte of the invention also can be obtained by known methods.

For example, a polymerizable boron-containing compound represented by formula (1), a high-molecular compound represented by formula (2), and an electrolyte salt are evenly mixed/dispersed by means of any of various kneaders and stirrers, and the resultant mixture is polymerized with an energy such as, e.g., visible light, ultraviolet, electron beams, or heat suitably using a polymerization initiator, etc. Thus, the target ion-conductive polymer electrolyte can be obtained.

The type of polymerization in this case may be ionic polymerization or radical polymerization. Either of these can yield the ion-conductive polymer electrolyte.

In producing the ion-conductive polymer electrolyte including a polymer of a boron-containing compound represented by formula (1) and a high-molecular compound represented by formula (2) in the invention, a polymerization initiator may be used but need not be used. However, from the standpoints of operation efficiency and polymerization rate, it is preferred to conduct thermal polymerization using an initiator for thermal radical polymerization.

The initiator for thermal radical polymerization is not particularly limited, and may be selected from the organic peroxides and azo compounds which are in general use. Specific examples of the initiator for thermal radical polymerization include diacyl peroxides such as 3,5,5-trimethylhexanoyl peroxide, octanoyl peroxide, lauroyl peroxide, and benzoyl peroxide, peroxydicarbonates such as di-n-propyl peroxydicarbonate, diisopropyl peroxydicarbonate, bis(4-t-butylcyclohexyl) peroxydicarbonate, and di-2-ethylhexyl peroxydicarbonate, peroxyesters such as cumyl peroxyneodecanoate, t-hexyl peroxyneodecanoate, t-butyl peroxyneodecanoate, t-hexyl peroxypivalate, t-butyl peroxypivalate, t-butyl peroxy-2-ethylhexanoate, t-butyl peroxy-3,5,5-trimethylhexanoate, and 2,5-dimethyl-2,5-bis(2-ethylhexanoylperoxy)hexane, peroxyketals such as 1,1-bis(t-butylperoxy)-3,3,5-trimethylcyclohexane and di-t-butylperoxy-2-methylcyclohexane, and azo compounds such as 2,2'-azobisisobutyronitrile, 1,1'-azobis-1-cyclohexanecarbonitrile, dimethyl 2,2'-azobisisobutyrate, and 2,2'-azobis-2,4-dimethylvaleronitrile.

An initiator for thermal radical polymerization suitably selected from those according to a desired polymerization temperature and the composition of the polymer may be used. However, for the purpose of not impairing the members to be used in an electrochemical device, it is preferred to use one which has a 10-hour half-life temperature, which is an index to decomposition temperature and decomposition rate, in the range of 30-90°C.

The polymer production with an initiator for thermal radical polymerization may be conducted at a temperature in the range of about ±10°C based on the 10-hour half-life temperature of the initiator for thermal radical polymerization used, while suitably regulating polymerization period until the polymer comes to have substantially no polymerizable

unsaturated double bonds therein.

The ion-conductive polymer electrolyte of the invention may be used after having been combined with a reinforcing material for the purpose of improving the tensile strength and flexural strength of the electrolyte. Examples of the reinforcing material include polyolefin moldings such as porous sheets of polyolefins, e.g., polyethylene and polypropylene, porous sheets obtained by laminating layers of such a sheet, and nonwoven fabrics of polyolefin fibers, formed glasses such as glass cloths, nonwoven glass fabrics, glass mats, glass fibers, and glass beads, inorganic powders such as silica, LaAlO, PbZrO, BaTiO, SrTiO, and PbTiO, and aromatic polyamide fibers and nonwoven fabrics thereof. Methods for combining the ion-conductive polymer electrolyte with the reinforcing material are not particularly limited. For example, a precursor for the ion-conductive polymer electrolyte, i. e., the precursor which has not been polymerized, is infiltrated beforehand into the sheet- or fabric-form reinforcing material and then polymerized. Alternatively, a reinforcing material is dispersed in a precursor for the ion-conductive polymer electrolyte before the precursor is polymerized. Thus, the ion-conductive polymer electrolyte combined with a reinforcing material can be obtained.

The electrolyte salt in the invention is not particularly limited so long as it is soluble in the ion-conductive polymer electrolyte. However,those enumerated below are preferred. Namely, preferred examples include compounds constituted of one or more metal cations and one or more anions selected from a chlorine ion, bromine ion, iodine ion, perchlorate ion, thiocyanate ion, tetrafluoroborate ion, hexafluorophosphate ion, trifluoromethanesulfonideimide acid ion, stearylsulfonate ion, octylsulfonate ion, dodecylbenzenesulfonate ion, naphthalenesulfonate ion, dodecylnaphthalenesulfonate ion, 7,7,8,8-tetracyano-p-quinodimethane ion, and lower aliphatic carboxylate ions. Examples of the metal cations include the ions of metals such as Li, Na, K, Rb, Cs, Mg, Ca, and Ba. The concentration of the electrolyte salt is preferably in the range of 0. 001-5 mol, more preferably in the range of 0.01-3 mol, per kg of the ion-conductive polymer electrolyte. In case where the value thereof exceeds 5 mol, there is a tendency that the precursor for the ion-conductive polymer electrolyte is reduced in processability and moldability and that the ion-conductive polymer electrolyte obtained is reduced in compressive strength and flexural strength.

The positive electrode in the invention, which reversibly occludes/releases lithium, is not particularly limited, and use may be made of a conventionally known positive electrode for lithium secondary batteries which is obtained by forming a film of a positive-electrode mix including a positive active material, a conduction aid material, and a binder on a current collector. Examples of the positive active material include lithium cobalt oxide ($LiCoO_2$), lithium nickel oxide ($LiNiO_2$), lamellar compounds such as lamellar lithium manganate ($LiMnO_2$) or $LiMn_xNiyCo_zO_2$ (x+y+z=1, 0≤y<1, 0≤z<1, 0≤x<1), which are composite oxides into which transition metals have been introduced, compounds substituted with one or more transition metal elements, lithium manganates ($Li_1+xMn_{2-1}O_4$ (wherein x is 0-0.33), $Li_1+xMn_{2-x-y}M_yO_4$ (wherein M includes at least one metal selected from Ni, Co, Cr, Cu, Fe, Al, and Mg; x is 0-0.33; y is 0-1.0; 2-x-y>0), $LiMnO_3$, $LiMn_2O_3$, $LiMnO_2$, $LiMn_{2-x}M_xO_2$ (wherein M includes at least one metal selected from Co, Ni, Fe, Cr, Zn, and Ta; x is 0.01-0.1), and $Li_2Mn_3MO_8$ (wherein M is at least one metal selected from Fe, Co, Ni, Cu, and Zn), copper lithium oxide ($Li_2CuO_2$), iron lithium oxide ($LiFe_3O_{4)}$, $LiFePO_4$, vanadium oxides such as $LiV_3O_8$, $V_2O_5$, and $Cu_2V_2O_7$, disulfide compounds, and $Fe_2\ (MoO_4)_3$. Examples of the conduction aid material include conductive carbon materials such as acetylene black, Ketjen Black, graphite, and carbon nanofibers. Examples of the binder include the ion-conductive polymer electrolyte of the invention and the high-molecular compounds (β).

The negative electrode in the invention, which reversibly occludes/releases lithium, is not particularly limited, and a conventionally known negative electrode for lithium secondary batteries may be used. For example, use may be made of: a negative electrode obtained by forming a film of a negative-electrode mix including a negative active material and a binder on a current collector such as, e.g., a copper foil; or a metal foil.

As the negative active material, use may be made, for example, of one obtained by subjecting an easily graphitizable material obtained from natural graphite, petroleum coke, coal pitch coke, or the like to a heat treatment at a high temperature of 2, 500˚C or above, mesophase carbon, amorphous carbon, carbon fibers, a metal which alloys with lithium, a material constituted of carbon particles and a metal deposited on the surface thereof, or the like. Examples of such a metal include lithium, aluminum, tin, silicon, indium, gallium, magnesium, and alloys of these. These metals or oxides of the metals also can be used as the negative active material.

Examples of the binder include the ion-conductive polymer electrolyte of the invention and the high-molecular compounds (β).

Methods for producing the positive electrode and negative electrode in the invention are not particularly limited, and the electrodes may be produced by a process for producing a conventionally known electrode for lithium secondary batteries. However, the electrodes may be produced by the following method. A mixture containing an active material and a conduction aid material is mixed with, e.g., a solution of a precursor for the ion-conductive polymer electrolyte, a polymerizable compound (α), or a high-molecular compound (β) in a low-boiling solvent to thereby obtain a slurry. Subsequently, this slurry is applied to a current collector, e.g., a metal foil, and then heated to remove the solvent contained in the slurry. This coated current collector is pressed with, e.g., a roller press, whereby the target electrode can be obtained. In the case where the slurry contains a compound having one or more polymerizable functional groups, it is preferred for the purpose of enabling smooth cation movement that the coated current collector should be heated

also during the pressing to thereby completely polymerize the polymerizable functional groups.

Methods for fabricating the secondary battery of the invention are not particularly limited, and the battery may be fabricated by a method for fabricating a conventionally known secondary battery. However, the battery of the invention may be fabricated, for example, by the following method. The ion-conductive polymer electrolyte is sandwiched between the positive electrode and negative electrode which each have been obtained by application to a metal foil, whereby the battery can be fabricated. Alternatively, the battery may be fabricated by applying either a precursor for the polymer electrolyte or a polar-solvent solution of the polymer electrolyte to a positive electrode or negative electrode, subsequently subjecting the resultant coating to polymerization or solvent removal to thereby form a film of the polymer electrolyte on the positive electrode or negative electrode, and laminating these electrodes.

Applications of the secondary battery of the invention are not particularly limited. However, the battery can be use in a wide range of fields such as, for example, portable AV appliances such as digital cameras, video cameras, portable audio players, and portable liquid-crystal TVs, portable information terminals such as notebook type personal computers, portable telephones, and electronic notebooks with communicative function,
and other applications including portable game machines, power tools, power-assisted bicycles, hybrid vehicles, electric vehicles, and electric-power storage systems.

EXAMPLES

The invention will be explained below in detail by reference to Examples. In the following Examples, sample preparation and a charge/discharge test were conducted in an argon atmosphere unless especially otherwise indicated.

(PRODUCTION EXAMPLE 1)

To 350 g (2.0 mol) of a polyethylene glycol (average number of moles added, 2.2) monomethacrylate and 203 g (1.0 mol) of a polypropylene glycol (average number of moles added, 2.4) monomethacrylate was added 207.6 g (2.0 mol) of trimethyl borate. The resultant mixture was held at 60˚C for 1 hour with stirring in a dry air atmosphere. Thereafter, the mixture was heated to 75˚C, and the internal pressure of the system was then gradually reduced. The system was kept in the state of having a pressure of 2.67 kPa (20 mmHg) or lower for 6 hours, and the volatile matter which had generated with the progress of the borate transesterification reaction and the excess trimethyl borate were removed. Thereafter, the reaction mixture was filtered to obtain 557 g of a polymerizable boron-containing compound A represented by formula (1). The polymerizable boron-containing compound A obtained was examined for infrared absorption spectrum. As a result, it was ascertained that the absorption band at 3,300 $cm^{-1}$ assigned to hydroxyl group had disappeared. The molecular structure of the polymerizable boron-containing compound A is shown in Table 1.

(PRODUCTION EXAMPLE 2)

To 1, 539 g (3.0 mol) of a polyethylene glycol (average number of moles added, 9.8) monoacrylate was added 207.6 g (2.0 mol) of trimethyl borate. The resultant mixture was held at 60˚C for 1 hour with stirring in a dry air atmosphere. Thereafter, the mixture was heated to 75˚C, and the internal pressure of the system was then gradually reduced. The system was kept in the state of having a pressure of 2.67 kPa (20 mmHg) or lower for 6 hours, and the volatile matter which had generated with the progress of the borate transesterification reaction and the excess trimethyl borate were removed.
Thereafter, the reaction mixture was filtered to obtain 1,486 g of a polymerizable boron-containing compound B represented by formula (1). The polymerizable boron-containing compound B obtained was examined for infrared absorption spectrum.
As a result, it was ascertained that the absorption band at 3,300 $cm^{-1}$ assigned to hydroxyl group had disappeared. The molecular structure of the polymerizable boron-containing compound B is shown in Table 1.

(PRODUCTION EXAMPLE 3)

To 525 g (3.0 mol) of a polyethylene glycol (average number of moles added, 2.2) monomethacrylate was added 207.6 g (2.0 mol) of trimethyl borate. The resultant mixture was held at 60˚C for 1 hour with stirring in a dry air atmosphere. Thereafter, the mixture was heated to 75˚C, and the internal pressure of the system was then gradually reduced. The system was kept in the state of having a pressure of 2.67 kPa (20 mmHg) or lower for 6 hours, and the volatile matter which had generated with the progress of the borate transesterification reaction and the excess trimethyl borate were removed. Thereafter, the reaction mixture was filtered to obtain 520 g of a polymerizable boron-containing compound C represented by formula (1). The polymerizable boron-containing compound C obtained was examined for infrared absorption spectrum. As a result, it was ascertained that the absorption band at 3,300 $cm^{-1}$ assigned to hydroxyl

group had disappeared. The molecular structure of the polymerizable boron-containing compound C is shown in Table 1.

(PRODUCTION EXAMPLE 4)

To 322 g (2.0 mol) of a polyethylene glycol (average number of moles added, 1.9) monoacrylate and 217 g (1.0 mol) of a polybutylene glycol (average number of moles added, 1.7) monoacrylate was added 207.6 g (2.0 mol) of trimethyl borate. The resultant mixture was held at 60 °C for 1 hour with stirring in a dry air atmosphere. Thereafter, the mixture was heated to 75°C, and the internal pressure of the system was then gradually reduced. The system was kept in the state of having a pressure of 2.67 kPa (20 mmHg) or lower for 6 hours, and the volatile matter which had generated with the progress of the borate transesterification reaction and the excess trimethyl borate were removed. Thereafter, the reaction mixture was filtered to obtain 544 g of a polymerizable boron-containing compound D represented by formula (1). The polymerizable boron-containing compound D obtained was examined for infrared absorption spectrum. As a result, it was ascertained that the absorption band at 3, 300 $cm^{-1}$ assigned to hydroxyl group had disappeared. The molecular structure of the polymerizable boron-containing compound D is shown in Table 1.

(COMPARATIVE PRODUCTION EXAMPLE 1)

To 2, 336 g (3.0 mol) of a poly (ethylene oxide-propylene oxide) (average number of moles added, 15.1) monomethacrylate obtained through the random copolymerization of ethylene oxide and propylene oxide in a ratio of 85/15 by mole was added 207.6 g (2.0 mol) of trimethyl borate. The resultant mixture was held at 60°C for 1 hour with stirring in a dry air atmosphere. Thereafter, the mixture was heated to 75°C, and the internal pressure of the system was then gradually reduced. The system was kept in the state of having a pressure of 2.67 kPa (20 mmHg) or lower for 6 hours, and the volatile matter which had generated with the progress of the borate transesterification reaction and the excess trimethyl borate were removed. Thereafter, the reaction mixture was filtered to obtain 2, 255 g of a polymerizable boron-containing compound E. The polymerizable boron-containing compound E obtained was examined for infrared absorption spectrum. As a result, it was ascertained that the absorption band at 3, 300 $cm^{-1}$ assigned to hydroxyl group had disappeared. The molecular structure of the polymerizable boron-containing compound E is shown in Table 1.

(COMPARATIVE PRODUCTION EXAMPLE 2)

To 350 g (2.0 mol) of a polyethylene glycol (average number of moles added, 2.2) monomethacrylate and 164 g (1.0 mol) of a triethylene glycol (average number of moles added, 3.0) monomethyl ether was added 207.6 g (2.0 mol) of trimethyl borate. The resultant mixture was held at 60°C for 1 hour with stirring in a dry air atmosphere. Thereafter, the mixture was heated to 75°C, and the internal pressure of the system was then gradually reduced. The system was kept in the state of having a pressure of 2.67 kPa (20 mmHg) or lower for 6 hours, and the volatile matter which had generated with the progress of the borate transesterification reaction and the excess trimethyl borate were removed. Thereafter, the reaction mixture was filtered to obtain 514 g of a polymerizable boron-containing compound F which had two polymerizable unsaturated double bonds per molecule on the average. The polymerizable boron-containing compound F obtained was examined for infrared absorption spectrum. As a result, it was ascertained that the absorption band at 3, 300 $cm^{-1}$ assigned to hydroxyl group had disappeared. The molecular structure of the polymerizable boron-containing compound F is shown in Table 1.

(PRODUCTION EXAMPLE 5)

Into a pressure-resistant reaction vessel were introduced 242 g of methanol and 2.25 g of sodium methylate. The atmosphere in the reaction vessel was replaced with nitrogen. The contents were heated to 120°C, and 2,008 g of ethylene oxide was then continuously added thereto. After completion of the ethylene oxide addition, the mixture was reacted at 120°C for 1 hour. Subsequently, the reaction mixture was cooled to 80°C and then subjected to an evacuation treatment at 1.34-6.68 kPa (10-50 mmHg) for 30 minutes while bubbling nitrogen gas into the mixture to thereby remove the residual methanol and ethylene oxide. A 200 g portion was taken out from the intermediate product of the reaction, neutralized with 1-N hydrochloric acid, and then dehydrated and filtered in a nitrogen atmosphere to obtain a polyethylene glycol monomethyl ether a. The polyethylene glycol monomethyl ether a obtained was examined by gel permeation chromatography (GPC) to calculate the average number of moles of ethylene oxide added. As a result, the average number thereof was found to be 6.5. To the remaining intermediate was added 855 g of potassium hydroxide. The atmosphere in the reaction vessel was replaced with nitrogen, and the contents were then cooled to 50°C. Thereto was added 415 g of methyl chloride. Thereafter, the mixture was heated to 80°C and reacted at 0.2 MPa for 1 hour, and was then heated to 120°C and reacted for further 5 hours. The resultant reaction product was washed with water, subsequently neutralized with 17.5% aqueous hydrochloric acid solution, and dehydrated by 5-hour heating at 80°C and ordinary

pressure and a subsequent 1-hour evacuation treatment at 1.34-6.68 kPa (10-50 mmHg) at an elevated temperature of 110˚C. Thus, a high-molecular compound a represented by formula (2) was obtained. The degree of etherification of the high-molecular compound a obtained was calculated using expression (3), and was found to be 99.2%. The molecular structure of the high-molecular compound a is shown in Table 2.

(PRODUCTION EXAMPLE 6)

Into a pressure-resistant reaction vessel were introduced 346 g of methanol and 2.25 g of sodium methoxide. The atmosphere in the reaction vessel was replaced with nitrogen. The contents were heated to 120˚C, and 1,903 g of ethylene oxide was then continuously added thereto. After completion of the ethylene oxide addition, the mixture was reacted at 120˚C for 1 hour. Subsequently, the reaction mixture was cooled to 80˚C and then subjected to an evacuation treatment at 1.34-6.68 kPa (10-50 mmHg) for 30 minutes while bubbling nitrogen gas into the mixture to thereby remove the residual methanol and ethylene oxide. A 200 g portion was taken out from the intermediate product of the reaction, neutralized with 1-N hydrochloric acid, and then dehydrated and filtered in a nitrogen atmosphere to obtain a polyethylene glycol monomethyl ether b. The polyethylene glycol monomethyl ether b obtained was examined by gel permeation chromatography (GPC) to calculate the average number of moles of ethylene oxide added. As a result, the average number thereof was found to be 4.1. To the remaining intermediate was added 1,213 g of potassium hydroxide. The atmosphere in the reaction vessel was replaced with nitrogen, and the contents were then cooled to 50˚C. Thereto was added 601 g of methyl chloride. Thereafter, the mixture was heated to 80˚C and reacted at 0.2 MPa for 1 hour, and was then heated to 120˚C and reacted for further 5 hours. The resultant reaction product was washed with water, subsequently neutralized with 17.5% aqueous hydrochloric acid solution, and dehydrated by 5-hour heating at 80˚C and ordinary pressure and a subsequent 1-hour evacuation treatment at 1.34-6.68 kPa (10-50 mmHg) at an elevated temperature of 110˚C. Thus, a high-molecular compound b represented by formula (2) was obtained. The degree of etherification of the high-molecular compound b obtained was calculated using expression (3), and was found to be 99.4%. The molecular structure of the high-molecular compound b is shown in Table 2.

(PRODUCTION EXAMPLE 7)

Into a pressure-resistant reaction vessel were introduced 107 g of ethanol and 2.25 g of sodium methoxide. The atmosphere in the reaction vessel was replaced with nitrogen. The contents were heated to 120˚C, and 1,740 g of ethylene oxide and 405 g of propylene oxide were then continuously added thereto. After completion of the addition of ethylene oxide and propylene oxide, the mixture was reacted at 120˚C for 1 hour. Subsequently, the reaction mixture was cooled to 80˚C and then subjected to an evacuation treatment at 1.34-6.68 kPa (10-50 mmHg) for 30 minutes while bubbling nitrogen gas into the mixture to thereby remove the residual methanol and ethylene oxide. A 200 g portion was taken out from the intermediate product of the reaction, neutralized with 1-N hydrochloric acid, and then dehydrated and filtered in a nitrogen atmosphere to obtain a poly(ethylene oxide-propylene oxide) monoethyl ether. The poly(ethylene oxide-propylene oxide) monoethyl ether obtained was examined by gel permeation chromatography (GPC) to calculate the average number of moles of ethylene oxide-propylene oxide added. As a result, the average number thereof was found to be 19.5. To the remaining intermediate was added 261 g of potassium hydroxide. The atmosphere in the reaction vessel was replaced with nitrogen, and the contents were then cooled to 50˚C. Thereto was added 164 g of ethyl chloride. Thereafter, the mixture was heated to 80˚C and reacted at 0.2 MPa for 1 hour, and was then heated to 120˚C and reacted for further 5 hours. The resultant reaction product was washed with water, subsequently neutralized with 17.5% aqueous hydrochloric acid solution, and dehydrated by 5-hour heating at 80˚C and ordinary pressure and a subsequent 1-hour evacuation treatment at 1.34-6. 68 kPa (10-50 mmHg) at an elevated temperature of 110˚C. Thus, a high-molecular compound c represented by formula (2) was obtained. The degree of etherification of the high-molecular compound c obtained was calculated using expression (3), and was found to be 99.8%. The molecular structure of the high-molecular compound c is shown in Table 2.

(COMPARATIVE PRODUCTION EXAMPLE 3)

To 492 g (3.0 mol) of a triethylene glycol (number of moles added, 3.0) monomethyl ether was added 207.6 g (2.0 mol) of trimethyl borate. The resultant mixture was held at 60˚C for 1 hour with stirring in a dry air atmosphere. Thereafter, the mixture was heated to 75˚C and the internal pressure of the system was then gradually reduced. The system was kept in the state of having a pressure of 2.67 kPa (20 mmHg) or lower for 6 hours, and the volatile matter which had generated with the progress of the borate transesterification reaction and the excess trimethyl borate were removed. Thereafter, the reaction mixture was filtered to obtain 496 g of a high-molecular compound d. The high-molecular compound d obtained was examined for infrared absorption spectrum. As a result, it was ascertained that the absorption band at 3,300 $cm^{-1}$ assigned to hydroxyl group had disappeared. The molecular structure of the high-molecular

compound d is shown in Table 2.

o Electrode Production Example

<Manganese-Containing Positive Electrode A>: A lithium manganate powder (trade name, E06Z; manufactured by Nikki Chemical Co., Lid.), amorphous carbon (trade name, Carbotron PE; manufactured by Kureha Chemical Industry Co., Ltd.), and a 10% by mass N-methylpyrrolidone solution of poly (vinylidene fluoride) (trade name, KF1120; manufactured by Kureha Chemical Industry Co., Ltd.) were mixed together in a proportion of 80/10/10 in terms of mass ratio among the solid ingredients excluding the N-methylpyrrolidone. The mixture was kneaded with a planetary mixer while suitably regulating the viscosity thereof by adding N-methylpyrrolidone to thereby obtain a dispersion solution in a slurry state. The dispersion solution obtained was applied to an aluminum foil (thickness, 20 $\mu$m) with a doctor blade in a thickness of 200 $\mu$m and then dried under vacuum at 100˚C for 5 hours. After completion of the drying, the coated aluminum foil was compressed with a bench press at room temperature so that the density of the resultant positive electrode excluding the aluminum foil became 1.8 g/cm$^3$, and then cut into a size of 1$\times$1 cm to obtain a manganese-containing positive electrode A. This positive electrode was used for the evaluation of discharge capacity and compressed-state discharge capacity which will be described later.

<Manganese-Containing Positive Electrode B>: A lithium manganate powder (trade name, E10Z; manufactured by Nikki Chemical Co., Ltd.), amorphous carbon (trade name, Carbotron PE; manufactured by Kureha Chemical Industry Co., Ltd.), and a 10% by mass N-methylpyrrolidone solution of poly (vinylidene fluoride) (trade name, KF1120; manufactured by Kureha Chemical Industry Co., Ltd.) were mixed together in a proportion of 80/10/10 in terms of mass ratio among the solid ingredients excluding the N-methylpyrrolidone. The mixture was kneaded with a planetary mixer while suitably regulating the viscosity thereof by adding N-methylpyrrolidone to thereby obtain a dispersion solution in a slurry state. The dispersion solution obtained was applied to an aluminum foil (thickness, 20 $\mu$m) with a doctor blade in a thickness of 200 $\mu$m and then dried under vacuum at 100 ˚C for 5 hours. The amount of the mix applied was 225 g/m$^2$. After completion of the drying, the coated aluminum foil was compressed with a bench press at room temperature so that the density of the resultant positive electrode excluding the aluminum foil became 2.5 g/cm$^3$, and then cut into a size of 40 mm $\times$ 60 mm. An aluminum tab having dimensions of 4 mm $\times$ 40 mm $\times$ 0.1 mm was bonded as a tab for current collection to the cut piece by ultrasonic welding to obtain a manganese-containing positive electrode B. This positive electrode was used for the evaluation of curved-state charge/discharge characteristics which will be described later.

<Cobalt-Containing Positive Electrode>: A lithium cobalt oxide powder (trade name, Cellseed C-10; manufactured by Nippon Chemical Industry Co., Ltd.), amorphous carbon (trade name, Carbotron PE; manufactured by Kureha Chemical Industry Co., Ltd.), and a 10% by mass N-methylpyrrolidone solution of poly(vinylidene fluoride) (trade name, KF1120; manufactured by Kureha Chemical Industry Co., Ltd.) were mixed together in a proportion of 80/10/10 in terms of mass ratio among the solid ingredients excluding the N-methylpyrrolidone. The mixture was kneaded with a planetary mixer while suitably regulating the viscosity thereof by adding N-methylpyrrolidone to thereby obtain a dispersion solution in a slurry state. The dispersion solution obtained was applied to an aluminum foil (thickness, 20 $\mu$m) with a doctor blade in a thickness of 200 $\mu$m and then dried under vacuum at 100˚C for 5 hours. After completion of the drying, the coated aluminum foil was compressed with a bench press at room temperature so that the density of the resultant positive electrode excluding the aluminum foil became 2.0 g/cm$^3$, and then cut into a size of 1$\times$1 cm to obtain a cobalt-containing positive electrode. This positive electrode was used for the evaluation of discharge characteristics which will be described later.

<Lithium Negative Electrodes>: A 2$\times$2 cm small piece was cut out of a lithium metal foil having a thickness of 0.5 mm (manufactured by Honjo Metal Co., Ltd.) to produce a lithium negative electrode A. A 4$\times$6 cm piece was cut out of the same foil, and a nickel tab having dimensions of 4$\times$40$\times$0.1 mm was bonded thereto as a tab for current collection to produce a lithium negative electrode B.

o Evaluation Methods

<Charge/Discharge Characteristics>: A battery placed in a thermostatic chamber set at 25˚C or 60˚C was subjected to a charge/discharge test with a charge/discharge tester (trade name, TOSCAT3100; manufactured by Toyo System Co., Ltd.) at a current density of 0.2 mA/cm$^2$. Charge/discharge conditions are shown below.

The battery was charged at the constant current to 4.3 V (battery employing the manganese-containing positive electrode A) or 4.2 V (battery employing the cobalt-containing positive electrode). After the voltage had reached 4.3 V or 4.2 V, constant-voltage charge was conducted for 5 hours. Subsequently, the battery was held in an open-circuit state for 30 minutes, and then discharged at the constant current to 3.0 V (battery employing the manganese-containing positive electrode A) or 2.5 V (battery employing the cobalt-containing positive electrode). In this operation, that value of discharge capacity per gram of the positive active material which was obtained through the first discharge was taken

as initial discharge capacity. Furthermore, the charge/discharge operation under the conditions described above was taken as one cycle and repeated to conduct 50 charge/discharge cycles. That discharge capacity per gram of the positive active material which was obtained through the discharge in the 50th cycle was taken as final discharge capacity. The retention of discharge capacity was calculated using mathematical expression (4).

$$[(\text{Final discharge capacity})/(\text{initial discharge capacity})]\times 100 \quad \text{mathematical expression (4)}$$

This evaluation method was used for evaluating charge/discharge characteristics in Examples 1 to 12 and Comparative Examples 1 to 8. The results of the evaluation are given in Tables 3 and 4.

<Compressed-State Charge/Discharge Characteristics>: A load of 20 N/cm$^2$ was imposed on central parts of a battery with round stainless-steel rods (Φ10 mm × 10 mm and Φ100 mm × 30 mm) (Fig. 2). The battery employing the manganese-containing positive electrode A was placed, while being kept in that state, in a 60˚C thermostatic chamber and subjected to a charge/discharge test with a charge/discharge tester (TOSCAT3100, manufactured by Toyo System Co., Ltd.) at a current density of 0.2 mA/cm$^2$. Charge/discharge conditions are shown below.

The battery was charged at the constant current to 4.3 V. After the voltage had reached 4.3 V, constant-voltage charge was conducted for 5 hours. This battery was then discharged at the constant current to a final discharge voltage of 3.0 V. In this operation, that value of discharge capacity per gram of the positive active material which was obtained through the first discharge was taken as initial discharge capacity. Furthermore, the charge/discharge operation under the conditions described above was taken as one cycle and repeated to conduct 50 charge/discharge cycles. That discharge capacity per gram of the positive active material which was obtained through the discharge in the 50th cycle was taken as final discharge capacity. A discharge capacity retention was calculated using mathematical expression (4).

This evaluation method was used for evaluating compressed-state charge/discharge characteristics in Examples 9 to 12 and Comparative Example 8. The results of the evaluation are given in Table 4.

<Curved-State Charge/Discharge Characteristics>: A battery was bent to 180 degrees along the periphery of a round stainless-steel rod (Φ3.0 mm × 300 mm and Φ5.0 mm × 300 mm) (Fig. 3). The battery employing the manganese-containing positive electrode B was placed, while being kept in that state, in a 60˚C thermostatic chamber and subjected to charge/discharge with a charger/discharger (TOSCAT3000, manufactured by Toyo System Co., Ltd.) at a current density of 0.4 mA/cm$^2$. The battery was charged to 4.3 V at the constant current. After the voltage had reached 4.3 V, constant-voltage charge was conducted for 12 hours. This battery was then discharged at the constant current to a final discharge voltage of 3.0 V. That value of capacity which was obtained through the first charge was taken as charge capacity. That value of capacity which was obtained through the first discharge was taken as discharge capacity. The charge/discharge operation under the conditions described above was taken as one cycle, and the number of cycle repetitions required for the discharge capacity to decrease to or below 50% of the initial discharge capacity was taken as the number of cycles. For the evaluation, the cycle was repeated 100 times at the most.

This evaluation method was used for evaluating compressed-state charge/discharge characteristics in Examples 13 to 26 and Comparative Examples 9 to 12. The results of the evaluation are given in Table 5.

(EXAMPLE 1)

In a gloved box the atmosphere in which had been replaced with argon, 8.5 g of the high-molecular compound a produced in Production Example 5 was added to 1.5 g of the polymerizable boron-containing compound A produced in Production Example 1. The resultant mixture was stirred until it became homogeneous. Thereafter, 0.6 g of $LiBF_4$ (manufactured by Tomiyama Pure Chemical Industries, Ltd.) was added thereto, and the mixture was stirred until the salt dissolved. Subsequently, 0.05 g of azoisobutyronitrile was added thereto as a polymerization initiator, and the mixture was stirred until the initiator dissolved. Thus, a polymer electrolyte precursor I was obtained. The polymer electrolyte precursor I obtained was applied to a PET film and polymerized at 80˚C for 2 hours to obtain a polymer electrolyte I. Subsequently, the manganese-containing positive electrode A and lithium negative electrode A which had been produced by the methods described above were disposed oppositely through the polymer electrolyte I as shown in Fig. 1 to fabricate a battery. The battery obtained was subjected to a charge/discharge test at 25˚C and 60˚C. As a result, the battery showed a high discharge capacity and a high retention thereof because the polymer electrolyte I used satisfied the scope of the invention. The results of the evaluation are shown in Table 3.

(EXAMPLE 2)

A battery was fabricated and subjected to a charge/discharge test in the same manners as in Example 1, except that the masses of the polymerizable boron-containing compound A, high-molecular compound a, and azoisobutyronitrile in Example 1 were changed to 3. 0 g, 7.0 g, and 0.1g, respectively. As a result of the charge/discharge test, the battery was found to show a high discharge capacity and a high retention thereof because the polymer electrolyte II used satisfied the scope of the invention. The results of the evaluation are shown in Table 3.

(EXAMPLE 3)

A battery was fabricated and subjected to a charge/discharge test in the same manners as in Example 1, except that the masses of the polymerizable boron-containing compound A, high-molecular compound a, and azoisobutyronitrile in Example 1 were changed to 4.0g, 5.0g, and 0.14g, respectively. As a result of the charge/discharge test, the battery was found to show a high discharge capacity and a high retention thereof because the polymer electrolyte III used satisfied the scope of the invention. The results of the evaluation are shown in Table 3.

(EXAMPLE 4)

In a gloved box the atmosphere in which had been replaced with argon, 8.0 g of the high-molecular compound a produced in Production Example 5 was added to 2.0 g of the polymerizable boron-containing compound B produced in Production Example 2. The resultant mixture was stirred until it became homogeneous. Thereafter, 2.5 g of lithium bis(pentafluoroethanesulfonyl)imide (trade name, Fluorad L-13858; manufactured by 3M Ltd.; referred to as LiBETI) was added thereto, and the mixture was stirred until the salt dissolved. Subsequently, 0.07 g of azoisobutyronitrile was added thereto as a polymerization initiator, and the mixture was stirred until the initiator dissolved. Thus, a polymer electrolyte precursor IV was obtained. The polymer electrolyte precursor IV obtained was applied to a PET film and polymerized at 80˚C for 2 hours to obtain a polymer electrolyte IV. Thereafter, a battery was fabricated and subjected to a charge/discharge test at 60˚C in the same manners as in Example 1. As a result of the charge/discharge test, the battery was found to show a high discharge capacity and a high retention thereof because the polymer electrolyte IV used satisfied the scope of the invention. The results of the evaluation are shown in Table 3.

(EXAMPLE 5)

A battery was fabricated and subjected to a charge/discharge test in the same manners as in Example 4, except that the polymerizable boron-containing compound B in Example 4 was replaced with the polymerizable boron-containing compound C produced in Production Example 3 and that the high-molecular compound a was replaced with the high-molecular compound b produced in Production Example 6. As a result of the charge/discharge test, the battery was found to show a high retention of discharge capacity because the polymer electrolyte V used satisfied the scope of the invention. The results of the evaluation are shown in Table 3.

(EXAMPLE 6)

A battery was fabricated and subjected to a charge/discharge test in the same manners as in Example 4, except that the polymerizable boron-containing compound B in Example 4 was replaced with the polymerizable boron-containing compound C produced in Production Example 3 and that the high-molecular compound a was replaced with the high-molecular compound c produced in Production Example 7. As a result of the charge/discharge test, the battery was found to show a high discharge capacity and a high retention thereof because the polymer electrolyte VI used satisfied the scope of the invention. The results of the evaluation are shown in Table 3.

(EXAMPLE 7)

A battery was fabricated and subjected to a charge/discharge test in the same manners as in Example 4, except that the polymerizable boron-containing compound B in Example 4 was replaced with the polymerizable boron-containing compound A produced in Production Example 1 and that in place of the 8.0 g of the high-molecular compound a, use was made of a mixture of 7.2 g of the high-molecular compound a and 0. 8 g of the polyethylene glycol (average number of moles added, 6.5) monomethyl ether a (referred to as PEGMME) produced in Production Example 5. As a result of the charge/discharge test, the battery was found to show a high discharge capacity and a high retention thereof because the polymer electrolyte VII used satisfied the scope of the invention. The results of the evaluation are shown in Table 3.

(EXAMPLE 8)

A battery was fabricated and subjected to a charge/discharge test in the same manners as in Example 4, except that the polymerizable boron-containing compound B in Example 4 was replaced with the polymerizable boron-containing compound D produced in Production Example 4 and that the manganese-containing positive electrode A was replaced with the cobalt-containing positive electrode. As a result of the charge/discharge test, the battery was found to show a high discharge capacity and a high retention thereof because the polymer electrolyte VIII used satisfied the scope of the invention. The results of the evaluation are shown in Table 3.

(EXAMPLE 9)

In a gloved box the atmosphere in which had been replaced with argon, 7.0 g of the high-molecular compound b produced in Production Example 6 and 1.0 g of acrylonitrile were added to 2.0 g of the polymerizable boron-containing compound A produced in Production Example 1. The resultant mixture was stirred until it became homogeneous. Thereafter, 2.5 g of LiBETI was added thereto, and the mixture was stirred until the salt dissolved. Subsequently, 0.1 g of bis (4-t-butylcyclohexyl) peroxydicarbonate (trade name, Peroyl TCP; manufactured by Nippon Oil & Fats Co., Ltd.) was added thereto as a polymerization initiator, and the mixture was stirred until the initiator dissolved. Thus, a polymer electrolyte precursor IX was obtained. The polymer electrolyte precursor IX obtained was applied to a PET film and the coated surface was then covered with another PET film to sandwich the coating film. This precursor was polymerized at 40˚C for 2 hours to obtain a polymer electrolyte IX. Subsequently, a battery was fabricated in the same manner as in Example 1. This battery was subjected to a charge/discharge test at 60˚C in each of a load-free state and the state of being loaded at 20 N/$cm^2$ as shown in Fig. 2. As a result of the charge/discharge test, the battery was found to show a high discharge capacity and a high retention thereof because the polymer electrolyte IX used satisfied the scope of the invention. The results of the evaluation are shown in Table 4.

(EXAMPLE 10)

A battery was fabricated and subjected to a charge/discharge test in the same manners as in Example 9, except that the acrylonitrile in Example 9 was replaced with methyl methacrylate. As a result of the charge/discharge test, the battery was found to show a high discharge capacity and a high retention thereof because the polymer electrolyte X used satisfied the scope of the invention. The results of the evaluation are shown in Table 4.

(EXAMPLE 11)

In a gloved box the atmosphere in which had been replaced with argon, 6.0 g of the high-molecular compound b produced in Production Example 6 and 2.0 g of 4-vinylethylene carbonate (reagent; manufactured by Kishida Chemical Co., Ltd.) were added to 2.0 g of the polymerizable boron-containing compound A produced in Production Example 1. The resultant mixture was stirred until it became homogeneous. Thereafter, 2.5 g of LiBETI was added thereto, and the mixture was stirred until the salt dissolved. Subsequently, 0.1 g of azoisobutyronitrile was added thereto as a polymerization initiator, and the mixture was stirred until the initiator dissolved. Thus, a polymer electrolyte precursor XI was obtained. The polymer electrolyte precursor XI obtained was applied to a PET film and polymerized at 80˚C for 2 hours to obtain a polymer electrolyte XI. Subsequently, a battery was fabricated and subjected to a charge/discharge test in the same manners as in Example 9. As a result of the charge/discharge test, the battery was found to show a high discharge capacity and a high retention thereof because the polymer electrolyte XI used satisfied the scope of the invention. The results of the evaluation are shown in Table 4.

(EXAMPLE 12)

In a gloved box the atmosphere in which had been replaced with argon, 6.0 g of the high-molecular compound a produced in Production Example 5, 2.0 g of 4-vinylethylene carbonate (reagent; manufactured by Kishida Chemical Co., Ltd.), and 6.0 g of a 5% by mass acetonitrile solution of a poly(ethylene oxide) in which the average number of moles of ethylene oxide added was 23, 000 (manufactured by Aldrich Co.) were added to 2.0 g of the polymerizable boron-containing compound A produced in Production Example 1. The resultant mixture was stirred until it became homogeneous. Thereafter, 2.5 g of LiBETI was added thereto, and the mixture was stirred until the salt dissolved. Subsequently, 0.1 g of azoisobutyronitrile was added thereto as a polymerization initiator, and the mixture was stirred until the initiator dissolved. Thus, a polymer electrolyte precursor XII was obtained. The polymer electrolyte precursor XII obtained was applied to a PET film, subsequently dried at 40˚C for 2 hours to remove the acetonitrile, and then polymerized at 80˚C for 2 hours to obtain a polymer electrolyte XII. Subsequently, a battery was fabricated and subjected

to a charge/discharge test in the same manners as in Example 9. As a result of the charge/discharge test, the battery was found to show a high discharge capacity and a high retention thereof because the polymer electrolyte XII used satisfied the scope of the invention. The results of the evaluation are shown in Table 4.

(EXAMPLE 13)

In a gloved box the atmosphere in which had been replaced with argon, 2.5 g of acetonitrile was added to 0.1 g of a poly(ethylene oxide) in which the average number of moles of ethylene oxide added was 23,000 (manufactured by Aldrich Co.). The resultant mixture was stirred until it became homogeneous. Subsequently, 1.5 g of the polymerizable boron-containing compound A produced in Production Example 1 and 8.5 g of the high-molecular compound a produced in Production Example 5 were added thereto, and the mixture was stirred until it became homogeneous. Thereafter, 2.5 g of lithium bis(pentafluoroethanesulfonyl)imide (trade name, Fluorad L-13858; manufactured by 3M Ltd. ; referred to as LiBETI) was added thereto, and the mixture was stirred until the salt dissolved. Subsequently, 0.05 g of azoisobutyronitrile was added thereto as a polymerization initiator, and the mixture was stirred until the initiator dissolved. Thus, a polymer electrolyte precursor XIII was obtained. The polymer electrolyte precursor XIII obtained was applied to a PET film, heated at 40˚C for 1.5 hours, and then polymerized at 100˚C for 2 hours to obtain a polymer electrolyte XIII. Subsequently, the manganese-containing positive electrode B and lithium negative electrode B which had been produced by the methods described above were disposed oppositely through the polymer electrolyte XIII as shown in Fig. 1 to fabricate a battery. The battery obtained was subjected at 60˚C to a curved-state charge/discharge test as shown in Fig. 3. As a result, the battery showed a high charge/discharge capacity and a large number of cycles because the polymer electrolyte XIII used satisfied the scope of the invention. The results of the evaluation are shown in Table 5.

(EXAMPLE 14)

A battery was fabricated and subjected to a charge/discharge test in the same manners as in Example 13, except that the mass of the poly (ethylene oxide) in which the average number of moles of ethylene oxide added was 23,000 (manufactured by Aldrich Co.) in Example 13 was changed from 0.1 g to 0.3 g. As a result of the charge/discharge test, the battery was found to show a high charge/discharge capacity and a large number of cycles because the polymer electrolyte XIV used satisfied the scope of the invention. The results of the evaluation are shown in Table 5.

(EXAMPLE 15)

A battery was fabricated and subjected to a charge/discharge test in the same manners as in Example 13, except that the mass of the poly(ethylene oxide) in which the viscosity-average molecular weight of ethylene oxide was 23, 000 (manufactured by Aldrich Co.) in Example 13 was changed from 0.1 g to 0.5 g. As a result of the charge/discharge test, the battery was found to show a high charge/discharge capacity and a large number of cycles because the polymer electrolyte XV used satisfied the scope of the invention. The results of the evaluation are shown in Table 5.

(EXAMPLE 16)

A battery was fabricated and subjected to a charge/discharge test in the same manners as in Example 13, except that the mass of the poly(ethylene oxide) in which the average number of moles of ethylene oxide added was 23,000 (manufactured by Aldrich Co.) in Example 13 was changed from 0.1 g to 0.8 g. As a result of the charge/discharge test, the battery was found to show a high charge/discharge capacity and a large number of cycles because the polymer electrolyte XVI used satisfied the scope of the invention. The results of the evaluation are shown in Table 5.

(EXAMPLE 17)

A battery was fabricated and subjected to a charge/discharge test in the same manners as in Example 13, except that the 0.1 g of the poly(ethylene oxide) in which the average number of moles of ethylene oxide added was 23,000 (manufactured by Aldrich Co.) in Example 13 was replaced with 0.3 g of a poly(ethylene oxide) in which the average number of moles added was 2,300 (manufactured by Aldrich Co.). As a result of the charge/discharge test, the battery was found to show a high charge/discharge capacity and a large number of cycles because the polymer electrolyte XVII used satisfied the scope of the invention. The results of the evaluation are shown in Table 5.

(EXAMPLE 18)

A battery was fabricated and subjected to a charge/discharge test in the same manners as in Example 13,

except that the 0.1 g of the poly(ethylene oxide) in which the average number of moles of ethylene oxide added was 23,000 (manufactured by Aldrich Co.) in Example 13 was replaced with 0.3 g of a poly(ethylene oxide) in which the average number of moles added was 9,100 (manufactured by Aldrich Co.). As a result of the charge/discharge test, the battery was found to show a high charge/discharge capacity and a large number of cycles because the polymer electrolyte XVIII used satisfied the scope of the invention. The results of the evaluation are shown in Table 5.

(EXAMPLE 19)

A battery was fabricated and subjected to a charge/discharge test in the same manners as in Example 13, except that the 0.1 g of the poly(ethylene oxide) in which the average number of moles of ethylene oxide added was 23,000 (manufactured by Aldrich Co.) in Example 13 was replaced with 0.3 g of a poly(ethylene oxide) in which the average number of moles added was 91,000 (manufactured by Aldrich Co.). As a result of the charge/discharge test, the battery was found to show a high charge/discharge capacity and a large number of cycles because the polymer electrolyte XVIIII used satisfied the scope of the invention. The results of the evaluation are shown in Table 5.

(EXAMPLE 20)

A battery was fabricated and subjected to a charge/discharge test in the same manners as in Example 13, except that the 0.1 g of the poly(ethylene oxide) in which the average number of moles of ethylene oxide added was 23,000 (manufactured by Aldrich Co.) in Example 13 was replaced with 0.3 g of a poly(ethylene oxide) in which the average number of moles added was 182,000 (manufactured by Aldrich Co.). As a result of the charge/discharge test, the battery was found to show a high charge/discharge capacity and a large number of cycles because the polymer electrolyte XX used satisfied the scope of the invention. The results of the evaluation are shown in Table 5.

(EXAMPLE 21)

A battery was fabricated and subjected to a charge/discharge test in the same manners as in Example 13, except that the polymerizable boron-containing compound A in Example 13 was replaced with the polymerizable boron-containing compound B produced in Production Example 2 and that the mass of the poly(ethylene oxide) in which the average number of moles added was 23, 000 (manufacturedbyAldrich Co.) was changed from 0.1 g to 0.3 g. As a result of the charge/discharge test, the battery was found to show a high charge/discharge capacity and a large number of cycles because the polymer electrolyte XXI used satisfied the scope of the invention. The results of the evaluation are shown in Table 5.

(EXAMPLE 22)

A battery was fabricated and subjected to a charge/discharge test in the same manners as in Example 21, except that the polymerizable boron-containing compound C produced in Production Example 3 was used in place of the polymerizable boron-containing compound B used in Example 21. As a result of the charge/discharge test, the battery was found to show a high charge/discharge capacity and a large number of cycles because the polymer electrolyte XXII used satisfied the scope of the invention. The results of the evaluation are shown in Table 5.

(EXAMPLE 23)

A battery was fabricated and subjected to a charge/discharge test in the same manners as in Example 21, except that the polymerizable boron-containing compound D produced in Production Example 4 was used in place of the polymerizable boron-containing compound B used in Example 21. As a result of the charge/discharge test, the battery was found to show a high charge/discharge capacity and a large number of cycles because the polymer electrolyte XXIII used satisfied the scope of the invention. The results of the evaluation are shown in Table 5.

(EXAMPLE 24)

A battery was fabricated and subjected to a charge/discharge test in the same manners as in Example 21, except that the polymerizable boron-containing compound A produced in Production Example 1 was used in place of the polymerizable boron-containing compound B used in Example 21, and that the high-molecular compound b produced in Production Example 6 was used in place of the high-molecular compound a. As a result of the charge/discharge test, the battery was found to show a high charge/discharge capacity and a large number of cycles because the polymer electrolyte XXIV used satisfied the scope of the invention. The results of the evaluation are shown in Table 5.

(EXAMPLE 25)

A battery was fabricated and subjected to a charge/discharge test in the same manners as in Example 21, except that the polymerizable boron-containing compound A produced in Production Example 1 was used in place of the polymerizable boron-containing compound B used in Example 21, and that the high-molecular compound c produced in Production Example 7 was used in place of the high-molecular compound a. As a result of the charge/discharge test, the battery was found to show a high charge/discharge capacity and a large number of cycles because the polymer electrolyte XXV used satisfied the scope of the invention. The results of the evaluation are shown in Table 5.

(EXAMPLE 26)

The polymer electrolyte XII produced in Example 12 was used to fabricate a battery in the same manner as in Example 13. This battery was subjected to a charge/discharge test in the same manner as in Example 13. As a result of the charge/discharge test, the battery was found to show a high charge/discharge capacity and a large number of cycles because the polymer electrolyte XII used satisfied the scope of the invention. The results of the evaluation are shown in Table 5.

(COMPARATIVE EXAMPLE 1)

A battery was fabricated and subjected to a charge/discharge test at 60˚C in the same manners as in Example 4, except that the polymerizable boron-containing compound B in Example 4 was replaced with the polymerizable boron-containing compound E produced in Comparative Production Example 1, and that the 2.5 g of LiBETI was replaced with 0.6 g of $LiBF_4$. As a result of the charge/discharge test, the battery was found to be poor in discharge capacity and retention thereof because the polymerizable boron-containing compound E did not satisfy the requirement for the polymerizable boron-containing compound in the invention. The results of the evaluation are shown in Table 3.

(COMPARATIVE EXAMPLE 2)

A battery was fabricated and subjected to a charge/discharge test in the same manners as in Comparative Example 1, except that the polymerizable boron-containing compound E in Comparative Example 1 was replaced with the polymerizable boron-containing compound F produced in Comparative Production Example 2. As a result of the charge/discharge test, the battery was found to be poor in discharge capacity and retention thereof because the polymerizable boron-containing compound F did not satisfy the requirement for the polymerizable boron-containing compound in the invention. The results of the evaluation are shown in Table 3.

(COMPARATIVE EXAMPLE 3)

In a gloved box the atmosphere in which had been replaced with argon, 160.0 g of a 5% by mass acetonitrile solution of a poly(ethylene oxide) in which the average number of moles of ethylene oxide added was 23,000 (manufactured by Aldrich Co.) was added to 2.0 g of the polymerizable boron-containing compound A produced in Production Example 1. The resultant mixture was stirred until it became homogeneous. Thereafter, 2.5 g of LiBETI was added thereto, and the mixture was further stirred until the salt dissolved. Subsequently, 0.07 g of azoisobutyronitrile was added thereto as a polymerization initiator, and the mixture was stirred until the initiator dissolved. Thus, a polymer electrolyte precursor XXVIII was obtained. The polymer electrolyte precursor XXVIII obtained was applied to a PET film, subsequently dried at 40˚C for 2 hours to remove the acetonitrile, and then polymerized at 80˚C for 2 hours to obtain a polymer electrolyte XXVIII. The polymer electrolyte XXVIII obtained was used to fabricate a battery in the same manner as in Example 1, and the battery was subjected to a charge/discharge test at 25˚C and 60˚C in the same manner as in Example 1. As a result of the charge/discharge test, the battery was found to be poor in discharge capacity and retention thereof because the poly(ethylene oxide) in which the average number of moles of ethylene oxide added was 23, 000 did not satisfy the requirement for the high-molecular compound in the invention. The results of the evaluation are shown in Table 3.

(COMPARATIVE EXAMPLE 4)

In a gloved box the atmosphere in which had been replaced with argon, 8.0 g of diglyme (manufactured by Wako Pure Chemical Industries, Ltd.) was added to 2.0 g of the polymerizable boron-containing compound A produced in Production Example 1. The resultant mixture was stirred until it became homogeneous. Thereafter, 2.5 g of LiBETI was added thereto, and the mixture was stirred until the salt dissolved. Subsequently, 0.1 g of bis (4-t-butylcyclohexyl)

peroxydicarbonate (trade name, Peroyl TCP; manufactured by Nippon Oil & Fats Co., Ltd.) was added thereto as a polymerization initiator, and the mixture was stirred until the initiator dissolved. Thus, a polymer electrolyte precursor XXVIIII was obtained. The polymer electrolyte precursor XXVIIII obtained was applied to a PET film and the coated surface was then covered with another PET film to sandwich the coating film. This precursor was polymerized at 40˚C for 2 hours to obtain a polymer electrolyte XXVIIII. Subsequently, a battery was fabricated and subjected to a charge/discharge test at 25˚C and 60˚C in the same manners as in Example 1. As a result of the charge/discharge test, the battery swelled at 60˚C because diglyme did not satisfy the requirement for the high-molecular compound in the invention. The charge/discharge test was hence stopped midway. The results of the evaluation are shown in Table 3.

(COMPARATIVE EXAMPLE 5)

A battery was fabricated and subjected to a charge/discharge test in the same manners as in Comparative Example 4, except that an ethylene carbonate/diethyl carbonate/dimethyl carbonate = 1/1/1 (volume ratio) solution (referred to as EC/DEC/DMC=1/1/1) was used in place of the diglyme used in Comparative Example 4. In Comparative Example 5, the charge/discharge test was conducted only at 60˚C. As a result of the charge/discharge test, the battery swelled because the ethylene carbonate/diethyl carbonate/dimethyl carbonate = 1/1/1 (volume ratio) solution did not satisfy the requirement for the high-molecular compound in the invention. The charge/discharge test was hence stopped midway. The results of the evaluation are shown in Table 3.

(COMPARATIVE EXAMPLE 6)

A battery was fabricated and subjected to a charge/discharge test in the same manners as in Example 4, except that the polymerizable boron-containing compound B in Example 4 was replaced with an ethoxy trimethylolpropane trimethacrylate (trade name, TMPT-9EO; manufactured by Shin-Nakamura Chemical Co., Ltd.; referred to as Et-TMPTM in Table 1). As a result of the charge/discharge test, the battery was found to be poor in discharge capacity and retention thereof because the ethoxy trimethylolpropane trimethacrylate did not satisfy the requirement for the polymerizable boron-containing compound in the invention. The results of the evaluation are shown in Table 3.

(COMPARATIVE EXAMPLE 7)

A battery was fabricated and subjected to a charge/discharge test at 25˚C and 60˚C in the same manners as in Example 4, except that the polymerizable boron-containing compound B in Example 4 was replaced with the polymerizable boron-containing compound A produced in Production Example 1, and that the high-molecular compound a was replaced with the high-molecular compound d produced in Comparative Production Example 3. As a result of the charge/discharge test, the battery was found to be poor in discharge capacity at 60˚C and retention thereof because the high-molecular compound d did not satisfy the requirement for the high-molecular compound in the invention. The results of the evaluation are shown in Table 3.

(COMPARATIVE EXAMPLE 8)

In a gloved box the atmosphere in which had been replaced with argon, 7.0 g of the high-molecular compound a produced in Production Example 5 was added to 60.0 g of a 5% by mass acetonitrile solution of a poly(ethylene oxide) in which the average number of moles of ethylene oxide added was 23, 000 (manufactured by Aldrich Co.), which was used in place of a polymerizable boron-containing compound. The resultant mixture was stirred until it became homogeneous. Thereafter, 2.5 g of LiBETI was added thereto, and the mixture was further stirred until the salt dissolved. The polymer electrolyte solution obtained was applied to a PET film and dried at 40˚C for 2 hours and then at 80˚C for 2 hours to obtain a polymer electrolyte XXXIII. The polymer electrolyte XXXIII obtained was used to fabricate a battery in the same manner as in Example 9. This battery was subjected to a charge/discharge test at 60˚C in each of a load-free state and the state of being loaded at 20 $N/cm^2$ as shown in Fig. 2. As a result of the charge/discharge test, the battery was found to be poor in discharge capacity and retention thereof because the poly(ethylene oxide) in which the average number of moles of ethylene oxide added was 23, 000 did not satisfy the requirement for the polymerizable boron-containing compound in the invention. The results of the evaluation are shown in Table 4.

(COMPARATIVE EXAMPLE 9)

A battery was fabricated and subjected to a charge/discharge test in the same manners as in Example 21, except that the polymerizable boron-containing compound E produced in Comparative Production Example 1 was used in place of the polymerizable boron-containing compound B used in Example 21 and that the high-molecular compound

c produced in Production Example 7 was used in place of the high-molecular compound a. As a result of the charge/discharge test, the battery was found to be poor in discharge capacity and in the number of cycles concerning the capacity because the polymer electrolyte XXXIV used was outside the scope of the invention. The results of the evaluation are shown in Table 5.

(COMPARATIVE EXAMPLE 10)

A battery was fabricated and subjected to a charge/discharge test in the same manners as in Comparative Example 9, except that the polymerizable boron-containing compound F produced in Comparative Production Example 2 was used in place of the polymerizable boron-containing compound E used in Comparative Example 9. As a result of the charge/discharge test, the battery was found to be poor in discharge capacity and in the number of cycles concerning the capacity because the polymer electrolyte XXXV used was outside the scope of the invention. The results of the evaluation are shown in Table 5.

(COMPARATIVE EXAMPLE 11)

In a gloved box the atmosphere in which had been replaced with argon, 25 g of acetonitrile was added to 1.0 g of a poly(ethylene oxide) in which the average number of moles of ethylene oxide added was 23,000 (manufactured by Aldrich Co.). The resultant mixture was stirred until it became homogeneous. Subsequently, 1.0 g of the polymerizable boron-containing compound d produced in Production Example 8 was added thereto, and the mixture was stirred until it became homogeneous. Thereafter, 0.5 g of lithium bis(pentafluoroethanesulfonyl)imide (trade name, Fluorad L-13858; manufactured by 3M Ltd.; referred to as LiBETI) was added thereto, and the mixture was stirred until the salt dissolved. The polymer electrolyte precursor XXXVI obtained was applied to a PET film and heated at 40˚C for 1.5 hours and then at 80˚C for 2 hours to obtain a polymer electrolyte XXXVI. Subsequently, the manganese-containing positive electrode B and lithium negative electrode B which had been produced by the methods described above were disposed oppositely through the polymer electrolyte XXXVI as shown in Fig. 1 to fabricate a battery. The battery obtained was subjected to a curved-state charge/discharge test at 60˚C. As a result, the battery was found to be poor in discharge capacity and in the number of cycles concerning the capacity because the polymer electrolyte XXXVI used was outside the scope of the invention. The results of the evaluation are shown in Table 5.

(COMPARATIVE EXAMPLE 12)

A battery was fabricated and subjected to a charge/discharge test in the same manners as in Comparative Example 11, except that ethylene carbonate (manufactured by Toyama Chemical Co., Ltd.) was used in place of the high-molecular compound d used in Comparative Example 11. The battery obtained was subjected to a curved-state charge/discharge test at 60˚C. As a result, the battery was found to be poor in discharge capacity and in the number of cycles concerning the capacity because the polymer electrolyte XXXVII used was outside the scope of the invention. The results of the evaluation are shown in Table 5.

[Table 1]

Table 1

| | Name in the description | Molecular structure |
|---|---|---|
| Production Example 1 | Polymerizable boron-containing compound A | 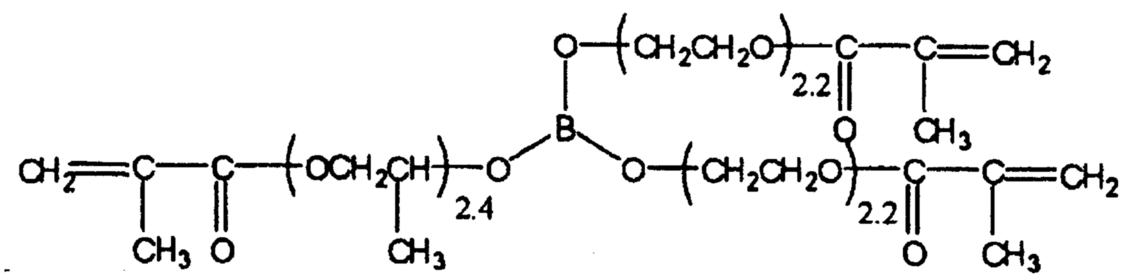 |
| Production Example 2 | Polymerizable boron-containing compound B | 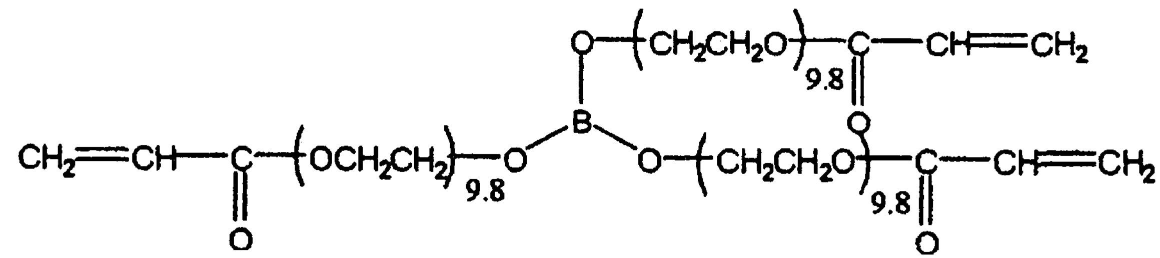 |
| Production Example 3 | Polymerizable boron-containing compound C | 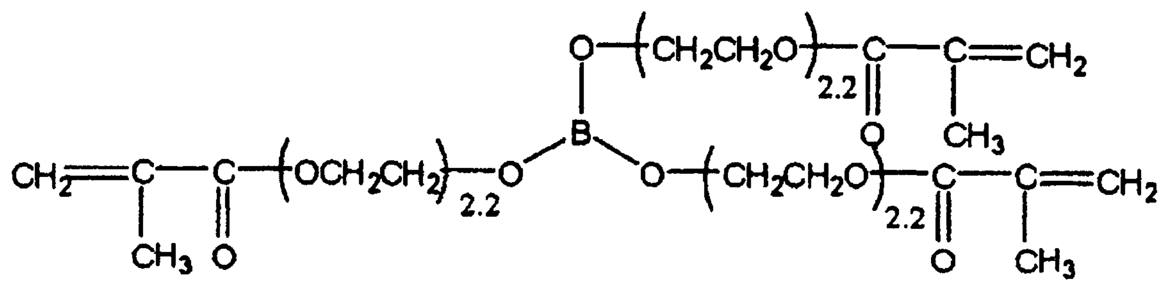 |

(continued)

| | Name in the description | Molecular structure |
|---|---|---|
| Production Example 4 | Polymerizable boron-containing compound D | 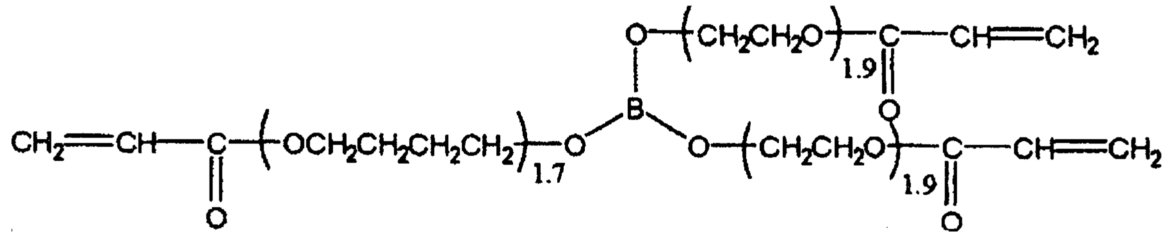 |
| Comparative Production Example 1 | Polymerizable boron-containing compound E | 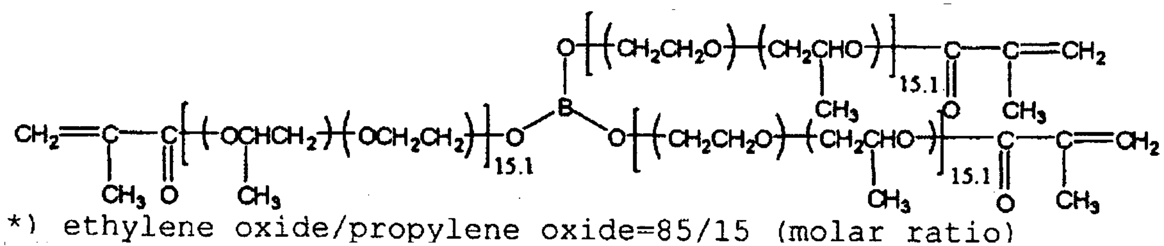 *) ethylene oxide/propylene oxide=85/15 (molar ratio) |
| Comparative Production Example 2 | Polymerizable boron-containing compound F | 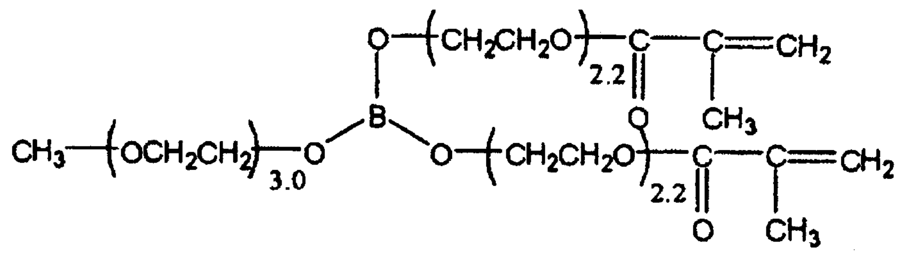 |

[Table 2]

Table 2

| | Name in the description | Molecular structure | Degree of etherification |
|---|---|---|---|
| Production Example 5 | High-molecular compound a | 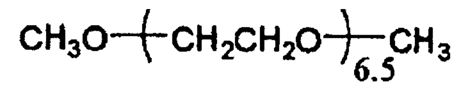 | 99.2 |
| Production Example 6 | High-molecular compound b | 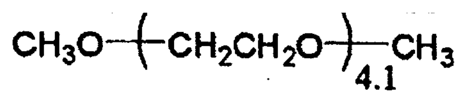 | 99.4% |
| Production Example 7 | High-molecular compound c | 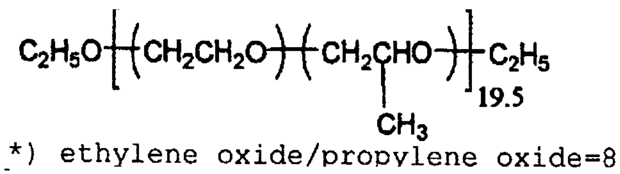 *) ethylene oxide/propylene oxide=85/15 (molar ratio) | 99.8% |
| Comparative Production Example 3 | High-molecular compound d | 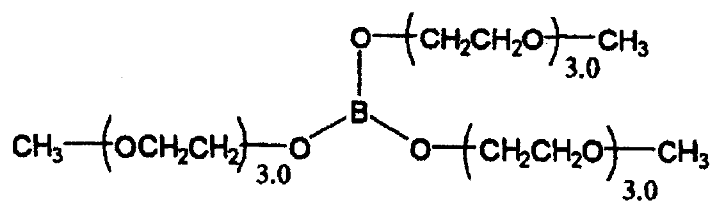 | - |

[Table 3]

Table 3

| | Polymerizable boron-containing compound | High-molecular compound | Degree of etherification of high-molecular compound (%) | Polymerizable boron-containing compound/high-molecular compound mass ratio | Kind of electrolyte salt | Concentration of Electrolyte salt (mol/kg) |
|---|---|---|---|---|---|---|
| Example 1 | A | a | 99.2 | 15/85 | $LiBF_4$ | 0.65 |
| Example 2 | A | a | 99.2 | 30/70 | $LiBF_4$ | 0.65 |
| Example 3 | A | a | 99.2 | 40/60 | $LiBF_4$ | 0.65 |
| Example 4 | B | a | 99.2 | 20/80 | LiBETI | 0.65 |
| Example 5 | C | b | 99.4 | 20/80 | LiBETI | 0.65 |
| Example 6 | C | c | 99.8 | 20/80 | LiBETI | 0.65 |
| Example 7 | A | a/PEGMME=90/10 (mass ratio) | 89.3 | 20/80 | LiBETI | 0.65 |
| Example 8 | D | a | 99.2 | 20/80 | LiBETI | 0.65 |
| Comparative Example 1 | E | a | 99.2 | 20/80 | $LiBF_4$ | 0.65 |
| Comparative Example 2 | F | a | 99.2 | 20/80 | $LiBF_4$ | 0.65 |
| Comparative Example 3 | A | PEO (n≈23000) | 0 | 20/80 | LiBETI | 0.65 |
| Comparative Example 4 | A | diglyme | - | 20/80 | LiBETI | 0.65 |
| Comparative Example 5 | A | EC/DEC/DMC=1/1/1 | - | 20/80 | LiBETI | 0.65 |
| Comparative Example 6 | Et-TMPTM | a | 99.2 | 20/80 | LiBETI | 0.65 |
| Comparative Example 7 | A | d | - | 20/80 | LiBETI | 0.65 |

Table 3 (continued)

| | Charge/discharge characteristics (25°C) | | | Charge/discharge characteristics (60°C) | | |
|---|---|---|---|---|---|---|
| | Initial discharge capacity (mAh/g) | Final discharge capacity (mAh/g) | Retention of discharge capacity (%) | Initial discharge capacity (mAh/g) | Final discharge capacity (mAh/g) | Retention of discharge capacity (%) |
| Example 1 | 103 | 100 | 97 | 103 | 101 | 98 |
| Example 2 | 103 | 101 | 98 | 103 | 101 | 98 |
| Example 3 | 95 | 90 | 95 | 97 | 93 | 96 |
| Example 4 | - | - | - | 103 | 98 | 95 |
| Example 5 | - | - | - | 103 | 100 | 97 |
| Example 6 | - | - | - | 101 | 95 | 94 |
| Example 7 | - | - | - | 95 | 89 | 94 |
| Example 8 | - | - | - | 138 | 129 | 93 |
| Comparative Example 1 | - | - | - | 90 | 65 | 72 |
| Comparative Example 2 | - | - | - | 103 | 48 | 47 |
| Comparative Example 3 | 0 | 0 | 0 | 15 | 0 | 0 |
| Comparative Example 4 | 103 | 99 | 96 | 103 | swelled | stopped |
| Comparative Example 5 | - | - | - | 103 | swelled | stopped |
| Comparative Example 6 | - | - | - | 103 | 65 | 63 |
| Comparative Example 7 | 103 | 97 | 94 | 103 | 32 | 31 |

Table 4

| | Polymerizable boron-containing compound | High-molecular compound of formula (2) | Degree of etherification of high-molecular compound of formula (2) | Polymerizable compound (α) | Polymerizable boron-containing compound/ high-molecular compound of formula (2)/ polymerizable compound (α) mass ratio | High-molecular compound of formula (3) | Average number of moles added in high-molecular compound of formula (3) | Proportion of high-molecular compound of formula (3) |
|---|---|---|---|---|---|---|---|---|
| Example 9 | A | b | 99.4 | acrylonitrile | 20/70/10 | - | - | 0 |
| Example 10 | A | b | 99.4 | methyl methacrylate | 20/70/10 | - | - | 0 |
| Example 11 | A | b | 99.4 | 4-vinylethylene carbonate | 20/60/20 | - | - | 0 |
| Example 12 | A | a | 99.2 | 4-vinylethylene carbonate | 20/60/20 | poly(ethylene oxide) | 23,000 | 3 |
| Comparative Example 8 | PEO (n≈23000) | a | 99.2 | - | 30/70/0 | - | - | 0 |

Table 4 (continued)

| | Kind of electrolyte salt | Concentration of electrolyte salt (mol/kg) | Charge/discharge characteristics (60°C) | | | Compressed-state charge/discharge characteristics (60°C) | | |
|---|---|---|---|---|---|---|---|---|
| | | | Initial discharge capacity (mAh/g) | Final discharge capacity (mAh/g) | Retention of discharge capacity (%) | Initial discharge capacity (mAh/g) | Final discharge capacity (mAh/g) | Retention of discharge capacity (%) |
| Example 9 | LiBETI | 0.65 | 100 | 96 | 96 | 102 | 96 | 94 |
| Example 10 | LiBETI | 0.65 | 98 | 92 | 94 | 100 | 97 | 97 |
| Example 11 | LiBETI | 0.65 | 100 | 94 | 94 | 103 | 99 | 96 |
| Example 25 | LiBETI | 0.65 | 102 | 95 | 93 | 100 | 96 | 96 |
| Comparative Example 8 | LiBETI | 0.65 | 62 | 45 | 73 | 64 | short-circuiting | stopped |

[Table 5]

| | Polymerizable boron-containing compound | High-molecular compound of formula (2) | Poly-merizable compound (α) | Other compound | High-molecular compound of formula (3) [poly(ethylene oxide)] | | Curved-state charge/discharge characteristics (60˚C) (Φ5 mm) | | | Curved-state charge/discharge characteristics (60˚C) (Φ3 mm) | | |
|---|---|---|---|---|---|---|---|---|---|---|---|---|
| | | | | | Average number of moles added | Pro-portion (%) | Charge capacity (mAh/g) | Discharge capacity (mAh/g) | Number of cycles | Charge capacity (mAh/g) | Discharge capacity (mAh/g) | Number of cycles |
| Example 13 | A | a | - | - | 23,000 | 1 | 101 | 98 | 100 | 103 | 101 | 100 |
| Example 14 | ↑ | ↑ | - | - | ↑ | 3 | 103 | 99 | 100 | 104 | 100 | 100 |
| Example 15 | ↑ | ↑ | - | - | ↑ | 5 | 109 | 104 | 100 | 101 | 98 | 100 |
| Example 16 | ↑ | ↑ | - | - | ↑ | 8 | 98 | 81 | 100 | 102 | 85 | 100 |
| Example 17 | ↑ | ↑ | - | - | 2,300 | 3 | 100 | 98 | 100 | 99 | 96 | 100 |
| Example 18 | ↑ | ↑ | - | - | 9,100 | ↑ | 96 | 94 | 100 | 109 | 105 | 100 |
| Example 19 | ↑ | ↑ | - | - | 91,000 | ↑ | 107 | 105 | 100 | 104 | 100 | 100 |
| Example 20 | ↑ | ↑ | - | - | 182,000 | ↑ | 100 | 86 | 100 | 95 | 83 | 100 |
| Example 21 | B | ↑ | - | - | 23,000 | ↑ | 105 | 96 | 100 | 101 | 92 | 100 |
| Example 22 | C | ↑ | - | - | ↑ | ↑ | 101 | 97 | 100 | 103 | 96 | 100 |
| Example 23 | D | ↑ | - | - | ↑ | ↑ | 95 | 93 | 100 | 100 | 93 | 100 |
| Example 24 | A | b | - | - | ↑ | ↑ | 108 | 104 | 100 | 101 | 98 | 100 |
| Example 25 | ↑ | c | - | - | ↑ | ↑ | 96 | 89 | 100 | 101 | 92 | 100 |
| Example 26 Comparative | ↑ | a | VEC | - | ↑ | ↑ | 102 | 94 | 100 | 104 | 99 | 100 |
| Example 9 | E | c | - | - | ↑ | ↑ | 81 | 47 | 5 | 75 | 40 | 2 |
| Comparative Example 10 | F | ↑ | - | - | ↑ | ↑ | 101 | 93 | 54 | 101 | 90 | 22 |
| Comparative Example 11 | - | d | - | - | ↑ | 100 | 18 | 0 | 1 | 20 | 5 | 1 |

(continued)

| | Polymerizable boron-containing compound | High-molecular compound of formula (2) | Poly-merizable compound (α) | Other compound | High-molecular compound of formula (3) [poly(ethylene oxide)] | | Curved-state charge/discharge characteristics (60°C) (Φ5 mm) | | | Curved-state charge/discharge characteristics (60°C) (Φ3 mm) | | |
|---|---|---|---|---|---|---|---|---|---|---|---|---|
| | | | | | Average number of moles added | Pro-portion (%) | Charge capacity (mAh/g) | Discharge capacity (mAh/g) | Number of cycles | Charge capacity (mAh/g) | Discharge capacity (mAh/g) | Number of cycles |
| Comparative Example 12 | - | - | - | EC | ↑ | ↑ | 15 | 0 | 1 | 12 | 0 | 1 |

* Note: In Comparative Example 11, the ratio by mass of the high-molecular compound d to the poly(ethylene oxide) in which the average number of moles of ethylene oxide added was 23,000 was 1:1.

In Comparative Example 12, the ratio by mass of the EC to the poly(ethylene oxide) in which the average number of moles of ethylene oxide added was 23,000 was 1:1. "EC" is an abbreviation of ethylene carbonate.

As apparent from Tables 3 to 5, the electrolytes according to the invention have low volatility, are excellent in moldability and processability, have flexibility, have high compressive strength, have satisfactory ionic conductivity in a wide temperature range from ordinary to high temperatures, and have satisfactory chemical stability in high-temperature environments. Furthermore, secondary batteries employing these electrolytes can be provided which have a practically sufficient output in a wide temperature range because the boron atoms have the effect of trapping anions and which are satisfactory in safety and reliability in high-temperature environments.

## Claims

1. An ion-conductive polymer electrolyte for electrochemical device which comprises a polymer of a polymerizable boron-containing compound represented by formula (1), a high-molecular compound represented by formula (2), and an electrolyte salt:

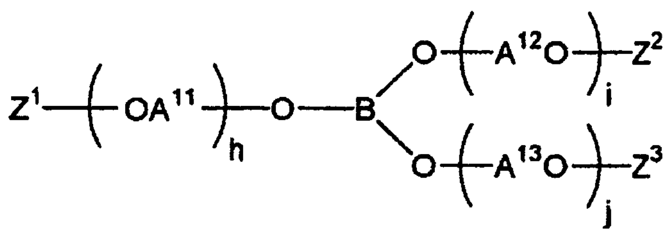

・・・(1)

wherein B represents a boron atom, $Z^1$, $Z^2$, and $Z^3$ each independently represent a polymerizable functional group having an unsaturated double bond, $A^{11}O$, $A^{12}O$, and $A^{13}O$ each independently represent an oxyalkylene group having from 2 to 6 carbon atoms, and h, i, and j, which each indicate average number of moles of the oxyalkylene group added, each independently are from 1 to 10;

$$R^1O\text{-} (A^2O)_k\text{-}R^2 \qquad (2)$$

wherein $R^1$ and $R^2$ each independently represent a hydrocarbon group having from 1 to 10 carbon atoms, $A^2O$ represents an oxyalkylene group having from 2 to 6 carbon atoms, k, which indicates average number of moles of the oxyalkylene group added, is from 4 to 20, and the groups $A^2O$ may be the same or different.

2. The ion-conductive polymer electrolyte for electrochemical device according to claim 1, wherein a ratio by mass of the polymer of a polymerizable boron-containing compound represented by formula (1) to the high-molecular compound represented by formula (2) is in such a range that (mass of the polymer of a polymerizable boron-containing compound represented by formula (1))/(mass of the high-molecular compound represented by formula (2)) is from 5/95 to 60/40.

3. The ion-conductive polymer electrolyte for electrochemical device according to claim 1, wherein $A^{11}O$, $A^{12}O$, and $A^{13}O$ in the polymerizable boron-containing compound represented by formula (1) and $A^2O$ in the high-molecular compound represented by formula (2) each independently are an oxyalkylene group having from 2 to 4 carbon atoms.

4. The ion-conductive polymer electrolyte for electrochemical device according to claim 1, wherein the polymer is a copolymer of the polymerizable boron-containing compound represented by formula (1) and polymerizable compound.

5. The ion-conductive polymer electrolyte for electrochemical device according to claim 4, wherein the polymerizable compound to be copolymerized with the polymerizable boron-containing compound is at least one compound selected from methyl acrylate, methyl methacrylate, acrylonitrile, methacrylonitrile, 4-vinylethylene carbonate, and 4-acryloyloxymethylethylene carbonate.

6. The ion-conductive polymer electrolyte for electrochemical device according to claim 1 or 4, wherein h, i, and j in

the polymerizable boron-containing compound represented by formula (1) each independently are from 1 to 3.

**7.** The ion-conductive polymer electrolyte for electrochemical device according to claim 1 or 4, wherein k in the high-molecular compound represented by formula (2) is from 4 to 12.

**8.** The ion-conductive polymer electrolyte for electrochemical device according to claim 1 or 4, wherein the high-molecular compound represented by formula (2) has a degree of etherification of 95% or higher.

**9.** The ion-conductive polymer electrolyte for electrochemical device according to claim 1 or 4, which further comprises a high-molecular compound represented by formula (3) in the following proportion:

$$HO\text{-}\,(A^3O)_1\text{-}H \qquad (3)$$

wherein $A^3O$ represents an oxyalkylene group having from 2 to 6 carbon atoms, 1, which indicates average number of moles of the oxyalkylene group added, is from 1,000 to 200,000, and the groups $A^3O$ may be the same or different; the ratio (mass of the high-molecular compound represented by formula (3))/[(mass of the polymer of a polymerizable boron-containing compound represented by formula (1))+(mass of the high-molecular compound represented by formula (2))] is in a range of from 0.01/100 to 10/100.

**10.** The ion-conductive polymer electrolyte for electrochemical device according to claim 9, wherein the ratio (mass of the high-molecular compound represented by formula (3) ) / [ (mass of the polymer of a polymerizable boron-containing compound represented by formula (1))+(mass of the high-molecular compound represented by formula (2))] is in a range of from 0.01/100 to 7/100.

**11.** An ion-conductive polymer electrolyte for electrochemical device which comprises the ion-conductive polymer electrolyte for electrochemical device according to claim 1 or 4 and a reinforcing material combined with the electrolyte.

**12.** An ion-conductive polymer electrolyte for electrochemical device which comprises the ion-conductive polymer electrolyte for electrochemical device according to claim 9 and a reinforcing material combined with the electrolyte.

**13.** A secondary battery which comprises a positive electrode including a positive active material which releases and occludes cations, a negative electrode including a negative active material which occludes and releases the cations released from the positive electrode or a negative electrode comprising lithium metal or a lithium alloy, and an electrolyte layer which is interposed between the positive electrode and the negative electrode and allows the cations to move therethrough, wherein the electrolyte layer comprises the ion-conductive polymer electrolyte for electrochemical device according to claim 1 or 4.

**14.** A secondary battery which comprises a positive electrode including a positive active material which releases and occludes cations, a negative electrode including a negative active material which occludes and releases the cations released from the positive electrode or a negative electrode comprising lithium metal or a lithium alloy, and an electrolyte layer which is interposed between the positive electrode and the negative electrode and allows the cations to move therethrough, **characterized in that** the electrolyte layer comprises the ion-conductive polymer electrolyte for electrochemical device according to claim 9.

**15.** A secondary battery which comprises a positive electrode including a positive active material which releases and occludes cations, a negative electrode including a negative active material which occludes and releases the cations released from the positive electrode or a negative electrode comprising lithium metal or a lithium alloy, and an electrolyte layer which is interposed between the positive electrode and the negative electrode and allows the cations to move therethrough, **characterized in that** the electrolyte layer comprises the ion-conductive polymer electrolyte for electrochemical device according to claim 11.

**16.** A secondary battery which comprises a positive electrode including a positive active material which releases and occludes cations, a negative electrode including a negative active material which occludes and releases the cations released from the positive electrode or a negative electrode comprising lithium metal or a lithium alloy, and an electrolyte layer which is interposed between the positive electrode and the negative electrode and allows the cations to move therethrough, **characterized in that** the electrolyte layer comprises the ion-conductive polymer electrolyte for electrochemical device according to claim 12.

## Patentansprüche

1. Ionen-leitender Polymerelektrolyt für ein elektrochemisches Gerät, der ein Polymer einer polymerisierbaren, Bor-enthaltenden Verbindung der Formel (1), eine hoch-molekulare Verbindung der Formel (2), sowie ein Elektrolytsalz umfasst:

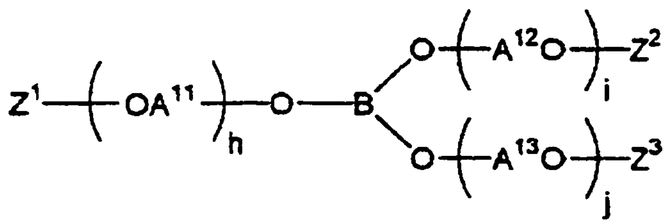

· · · (1)

worin B ein Boratom darstellt, $Z^1$, $Z^2$ und $Z^3$ jeweils unabhängig voneinander eine polymerisierbare funktionelle Gruppe mit einer ungesättigten Doppelbindung darstellen, $A^{11}O$, $A^{12}O$ und $A^{13}O$ jeweils unabhängig voneinander eine Oxyalkylengruppe mit 2 bis 6 Kohlenstoffatomen darstellen, und h, i und j, die jeweils die mittlere Additionsmolzahl der addierten Oxyalkylengruppen angeben, jeweils unabhängig voneinander 1 bis 10 sind;

$$R^1O\text{-}(A^2O)_k\text{-}R^2 \qquad (2)$$

worin $R^1$ und $R^2$ jeweils unabhängig voneinander eine Kohlenwasserstoffgruppe mit 1 bis 10 Kohlenstoffatomen darstellen, $A^2O$ eine Oxyalkylengruppe mit 2 bis 6 Kohlenstoffatomen darstellt, k, das die mittlere Additionsmolzahl der addierten Oxyalkylengruppen angibt, von 4 bis 20 ist, und die Gruppen $A^2O$ gleich oder unterschiedlich sein können.

2. Ionen-leitender Polymerelektrolyt für ein elektrochemisches Gerät gemäß Anspruch 1, worin das Massenverhältnis des Polymers der polymerisierbaren Bor-enthaltenden Verbindung der Formel (1) zur hoch-molekularen Verbindung der Formel (2) in einem solchen Bereich ist, dass (Masse des Polymers der polymerisierbaren Bor-enthaltenden Verbindung der Formel (1))/(Masse der hoch-molekularen Verbindung der Formel (2)) 5/95 bis 60/40 ist.

3. Ionen-leitender Polymerelektrolyt für ein elektrochemisches Gerät gemäß Anspruch 1, worin $A^{11}O$, $A^{12}O$ und $A^{13}O$ in der polymerisierbaren Bor-enthaltenden Verbindung der Formel (1) und $A^2O$ in der hoch-molekularen Verbindung der Formel (2) jeweils unabhängig voneinander eine Oxyalkylengruppe mit 2 bis 4 Kohlenstoffatomen sind.

4. Ionen-leitender Polymerelektrolyt für ein elektrochemisches Gerät gemäß Anspruch 1, worin das Polymer ein Copolymer der polymerisierbaren Bor-enthaltenden Verbindung der Formel (1) und einer polymerisierbaren Verbindung ist.

5. Ionen-leitender Polymerelektrolyt für ein elektrochemisches Gerät gemäß Anspruch 4, worin die polymerisierbare Verbindung, die mit der polymerisierbaren Bor-enthaltenden Verbindung copolymerisiert werden soll, mindestens eine Verbindung ausgewählt aus Methylacrylat, Methylmethacrylat, Acrylnitril, Methacrylnitril, 4-Vinylethylencarbonat und 4-Acryloyloxymethylethylencarbonat ist.

6. Ionen-leitender Polymerelektrolyt für ein elektrochemisches Gerät gemäß Anspruch 1 oder 4, worin h, i und j in der polymerisierbaren Bor-enthaltenden Verbindung der Formel (1) jeweils unabhängig voneinander von 1 bis 3 sind.

7. Ionen-leitender Polymerelektrolyt für ein elektrochemisches Gerät gemäß Anspruch 1 oder 4, worin k in der hoch-molekularen Verbindung der Formel (2) 4 bis 12 ist.

8. Ionen-leitender Polymerelektrolyt für ein elektrochemisches Gerät gemäß Anspruch 1 oder 4, worin die hoch-molekulare Verbindung der Formel (2) einen Verätherungsgrad von 95 % oder höher hat.

9. Ionen-leitender Polymerelektrolyt für ein elektrochemisches Gerät gemäß Anspruch 1 oder 4, der weiterhin eine hoch-molekulare Verbindung der Formel (3) in folgendem Anteil umfasst:

$$HO-(A^3O)_1-H \quad (3)$$

worin $A^3O$ eine Oxyalkylengruppe mit 2 bis 6 Kohlenstoffatomen darstellt, 1, das die mittlere Anzahl von Molen der addierten Oxyalkylengruppe angibt, von 1.000 bis 200.000 ist, und die Gruppen $A^3O$ die gleichen oder unterschiedlich sein können; das Verhältnis (Masse der hoch-molekularen Verbindung der Formel (3))/[(Masse des Polymers der polymerisierbaren Bor-enthaltenden Verbindung der Formel (1))+(Masse der hoch-molekularen Verbindung der Formel (2))] im Bereich von 0,01/100 bis 10/100 ist.

**10.** Ionen-leitender Polymerelektrolyt für ein elektrochemisches Gerät gemäß Anspruch 9, worin das Verhältnis (Masse der hoch-molekularen Verbindung der Formel (3))/[(Masse des Polymers der polymerisierbaren Bor-enthaltenden Verbindung der Formel (1))+(Masse der hoch-molekularen Verbindung der Formel (2))] im Bereich von 0,01/100 bis 7/100 ist.

**11.** Ionen-leitender Polymerelektrolyt für ein elektrochemisches Gerät, der den Ionen-gleitenden Polymerelektrolyt für ein elektrochemisches Gerät gemäß Anspruch 1 oder 4 und ein mit dem Elektrolyt verbundenes verstärkendes Material umfasst.

**12.** Ionen-leitender Polymerelektrolyt für ein elektrochemisches Gerät, der den Ionen-leitenden Polymerelektrolyt für ein elektrochemisches Gerät gemäß Anspruch 9 und ein mit dem Elektrolyt verbundenes verstärkendes Material umfasst.

**13.** Sekundärbatterie, die eine positive Elektrode, die ein positives aktives Material beinhaltet, das Kationen freisetzt und aufnimmt, eine negative Elektrode, die ein negatives aktives Material beinhaltet, das die aus der positive Elektrode freigesetzten Kationen aufnimmt und freisetzt oder eine negative Elektrode, die Lithiummetall oder eine Lithiumlegierung umfasst, und eine Elektrolytschicht, die zwischen der positive Elektrode und der negative Elektrode eingebracht ist und es den Kationen ermöglicht, sich durch sie hindurch zu bewegen, umfasst, worin die Elektrolytschicht den Ionen-leitenden Polymerelektrolyt für ein elektrochemisches Gerät gemäß Anspruch 1 oder 4 umfasst.

**14.** Sekundärbatterie, die eine positive Elektrode, die ein positives aktives Material beinhaltet, das Kationen freisetzt und aufnimmt, eine negative Elektrode, die ein negatives aktives Material beinhaltet, das die aus der positive Elektrode freigesetzten Kationen aufnimmt und freisetzt oder eine negative Elektrode, die Lithiummetall oder eine Lithiumlegierung umfasst, und eine Elektrolytschicht, die zwischen der positive Elektrode und der negative Elektrode eingebracht ist und es den Kationen ermöglicht, sich durch sie hindurch zu bewegen, umfasst, **dadurch gekennzeichnet, dass** die Elektrolytschicht den Ionen-leitenden Polymerelektrolyt für ein elektrochemisches Gerät gemäß Anspruch 9 umfasst.

**15.** Sekundärbatterie, die eine positive Elektrode, die ein positives aktives Material beinhaltet, das Kationen freisetzt und aufnimmt, eine negative Elektrode, die ein negatives aktives Material beinhaltet, das die aus der positive Elektrode freigesetzten Kationen aufnimmt und freisetzt oder eine negative Elektrode, die Lithiummetall oder eine Lithiumlegierung umfasst, und eine Elektrolytschicht, die zwischen der positive Elektrode und der negative Elektrode eingebracht ist und es den Kationen ermöglicht, sich durch sie hindurch zu bewegen, umfasst, **dadurch gekennzeichnet, dass** die Elektrolytschicht den Ionen-leitenden Polymerelektrolyt für ein elektrochemisches Gerät gemäß Anspruch 11 umfasst.

**16.** Sekundärbatterie, die eine positive Elektrode, die ein positives aktives Material beinhaltet, das Kationen freisetzt und aufnimmt, eine negative Elektrode, die ein negatives aktives Material beinhaltet, das die aus der positive Elektrode freigesetzten Kationen aufnimmt und freisetzt oder eine negative Elektrode, die Lithiummetall oder eine Lithiumlegierung umfasst, und eine Elektrolytschicht, die zwischen der positive Elektrode und der negative Elektrode eingebracht ist und es den Kationen ermöglicht, sich durch sie hindurch zu bewegen, umfasst, **dadurch gekennzeichnet, dass** die Elektrolytschicht den Ionen-leitenden Polymerelektrolyt für ein elektrochemisches Gerät gemäß Anspruch 12 umfasst.

## Revendications

**1.** Electrolyte polymère conducteur d'ions pour un dispositif électrochimique qui comprend un polymère d'un composé polymérisable contenant du bore représenté par la formule (1), un composé de masse moléculaire élevée représenté par la formule (2), et un sel d'électrolyte :

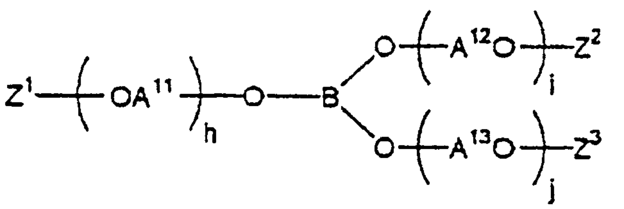

· · · (1)

dans laquelle B représente un atome de bore, $Z^1$, $Z^2$ et $Z^3$ représentent chacun indépendamment un groupe fonctionnel polymérisable présentant une double liaison insaturée, $A^{11}O$, $A^{12}O$, et $A^{13}O$ représentent chacun indépendamment un groupe oxyalkylène ayant de 2 à 6 atomes de carbone, et h, i et j, dont chacun indique un nombre moyen de moles du groupe oxyalkylène ajouté, sont chacun indépendamment égaux à de 1 à 10 ;

$$R^1O\text{-}(A^2O)_k\text{-}R^2 \qquad (2)$$

dans laquelle $R^1$ et $R^2$ représentent chacun indépendamment un groupe hydrocarboné ayant de 1 à 10 atomes de carbone, $A^2O$ représente un groupe oxyalkylène ayant de 2 à 6 atomes de carbone, k, lequel indique un nombre moyen de moles du groupe oxyalkylène ajouté, est de 4 à 20, et les groupes $A^2O$ peuvent être identiques ou différents.

**2.** Electrolyte polymère conducteur d'ions pour un dispositif électrochimique selon la revendication 1, dans lequel un rapport en masse du polymère d'un composé polymérisable contenant du bore représenté par la formule (1) au composé de masse moléculaire élevée représenté par la formule (2) est dans un intervalle tel que (masse du polymère d'un composé polymérisable contenant du bore représenté par la formule (1))/(masse du composé de masse moléculaire élevée représentée par la formule (2)) est de 5/95 à 60/40.

**3.** Electrolyte polymère conducteur d'ions pour un dispositif électrochimique, selon la revendication 1, dans lequel $A^{11}O$, $A^{12}O$ et $A^{13}O$ dans le composé polymérisable contenant du bore représenté par la formule (1) et $A^2O$ dans le composé de masse moléculaire élevée représenté par la formule (2) sont chacun indépendamment un groupe oxyalkylène ayant de 2 à 4 atomes de carbone.

**4.** Electrolyte polymère conducteur d'ions pour un dispositif électrochimique selon la revendication 1, dans lequel le polymère est un copolymère du composé polymérisable contenant du bore représenté par la formule (1) et d'un composé polymérisable.

**5.** Electrolyte polymère conducteur d'ions pour un dispositif électrochimique selon la revendication 4, dans lequel le composé polymérisable à copolymériser avec le composé polymérisable contenant du bore est au moins un composé choisi parmi l'acrylate de méthyle, le méthacrylate de méthyle, l'acrylonitrile, le méthacrylonitrile, le carbonate de 4-vinyléthylène et le carbonate de 4-acryloyloxyméthyléthylène.

**6.** Electrolyte polymère conducteur d'ions pour un dispositif électrochimique selon la revendication 1 ou 4, dans lequel h, i et j dans le composé polymérisable contenant du bore représenté par la formule (1) sont chacun indépendamment égaux à de 1 à 3.

**7.** Electrolyte polymère conducteur d'ions pour un dispositif électrochimique selon la revendication 1 ou 4, dans lequel k dans le composé de masse moléculaire élevée représenté par la formule (2) est de 4 à 12.

**8.** Electrolyte polymère conducteur d'ions pour un dispositif électrochimique selon la revendication 1 ou 4, dans lequel le composé de masse moléculaire élevée représenté par la formule (2) présente un degré d'éthérification de 95 % ou supérieur.

**9.** Electrolyte polymère conducteur d'ions pour un dispositif électrochimique selon la revendication 1 ou 4, lequel comprend de plus un composé de masse moléculaire élevée représenté par la formule (3) dans la proportion suivante :

$$HO\text{-}(A^3O)_l\text{-}H \qquad (3)$$

dans laquelle $A^3O$ représente un groupe oxyalkylène ayant de 2 à 6 atomes de carbone, l, qui indique un nombre moyen de moles du groupe oxyalkylène ajouté, est de 1 000 à 200 000, et les groupes $A^3O$ peuvent être identiques ou différents ; le rapport (masse du composé de masse moléculaire élevée représenté par la formule (3))/[(masse du polymère d'un composé polymérisable contenant du bore représenté par la formule (1))+(masse du composé de masse moléculaire élevée représenté par la formule (2))] se trouve dans un intervalle de 0,01/100 à 10/100.

**10.** Electrolyte polymère conducteur d'ions pour un dispositif électrochimique selon la revendication 9, dans lequel le rapport (masse du composé de masse moléculaire élevée représenté par la formule (3))/[(masse du polymère d'un composé polymérisable contenant du bore représenté par la formule (1))+(masse du composé de masse moléculaire élevée représenté par la formule (2))] se trouve dans un intervalle de 0,01/100 à 7/100.

**11.** Electrolyte polymère conducteur d'ions pour un dispositif électrochimique qui comprend l'électrolyte polymère conducteur d'ions pour un dispositif électrochimique selon la revendication 1 ou 4 et un matériau de renforcement combiné avec l'électrolyte.

**12.** Electrolyte polymère conducteur d'ions pour un dispositif électrochimique qui comprend l'électrolyte polymère conducteur d'ions pour un dispositif électrochimique selon la revendication 9 et un matériau de renforcement combiné avec l'électrolyte.

**13.** Accumulateur secondaire qui comprend une électrode positive comprenant une matière active positive qui libère et absorbe des cations, une électrode négative comprenant une matière active négative qui absorbe et libère les cations libérés de l'électrode positive ou une électrode négative comprenant du métal de lithium ou un alliage de lithium, et une couche d'électrolyte qui est intercalée entre l'électrode positive et l'électrode négative et qui permet aux cations de se déplacer à travers celle-ci, dans lequel la couche d'électrolyte comprend l'électrolyte polymère conducteur d'ions pour un dispositif électrochimique selon la revendication 1 ou 4.

**14.** Accumulateur secondaire qui comprend une électrode positive comprenant une matière active positive qui libère et absorbe des cations, une électrode négative comprenant une matière active négative qui absorbe et libère les cations libérés de l'électrode positive ou une électrode négative comprenant du métal de lithium ou un alliage de lithium, et une couche d'électrolyte qui est intercalée entre l'électrode positive et l'électrode négative et qui permet aux cations de se déplacer à travers celle-ci, **caractérisé en ce que** la couche d'électrolyte comprend l'électrolyte polymère conducteur d'ions pour un dispositif électrochimique selon la revendication 9.

**15.** Accumulateur secondaire qui comprend une électrode positive comprenant une matière active positive qui libère et absorbe des cations, une électrode négative comprenant une matière active négative qui absorbe et libère les cations libérés par l'électrode positive ou une électrode négative comprenant du métal de lithium ou un alliage de lithium, et une couche d'électrolyte qui est intercalée entre l'électrode positive et l'électrode négative et qui permet aux cations de se déplacer à travers celle-ci, **caractérisé en ce que** la couche d'électrolyte comprend l'électrolyte polymère conducteur d'ions pour un dispositif électrochimique selon la revendication 11.

**16.** Accumulateur secondaire qui comprend une électrode positive comprenant une matière active positive qui libère et absorbe des cations, une électrode négative comprenant une matière active négative qui absorbe et libère des cations libérés par l'électrode positive ou une électrode négative comprenant du métal de lithium ou un alliage de lithium, et une couche d'électrolyte qui est intercalée entre l'électrode positive et l'électrode négative et qui permet aux cations de se déplacer à travers celle-ci, **caractérisé en ce que** la couche d'électrolyte comprend l'électrolyte polymère conducteur d'ions pour un dispositif électrochimique selon la revendication 12.

FIG. 1

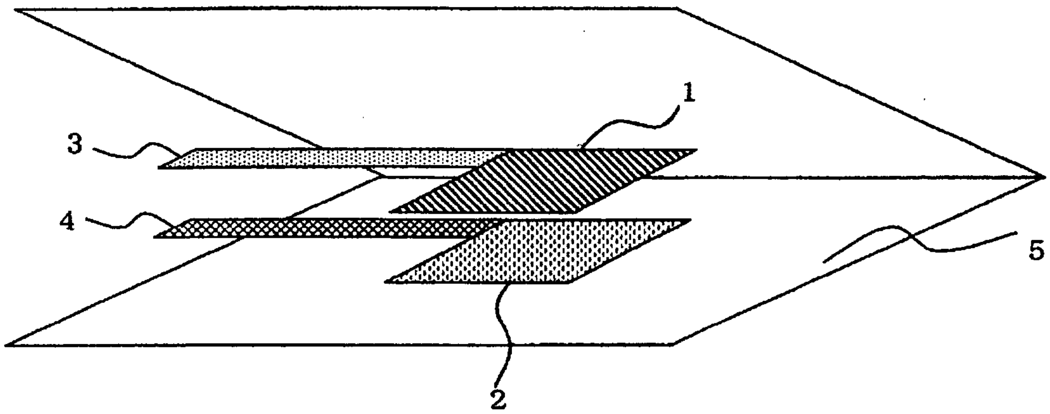


FIG. 2

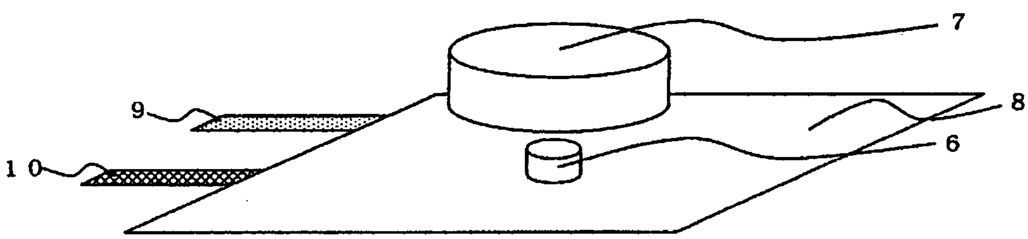

FIG. 3

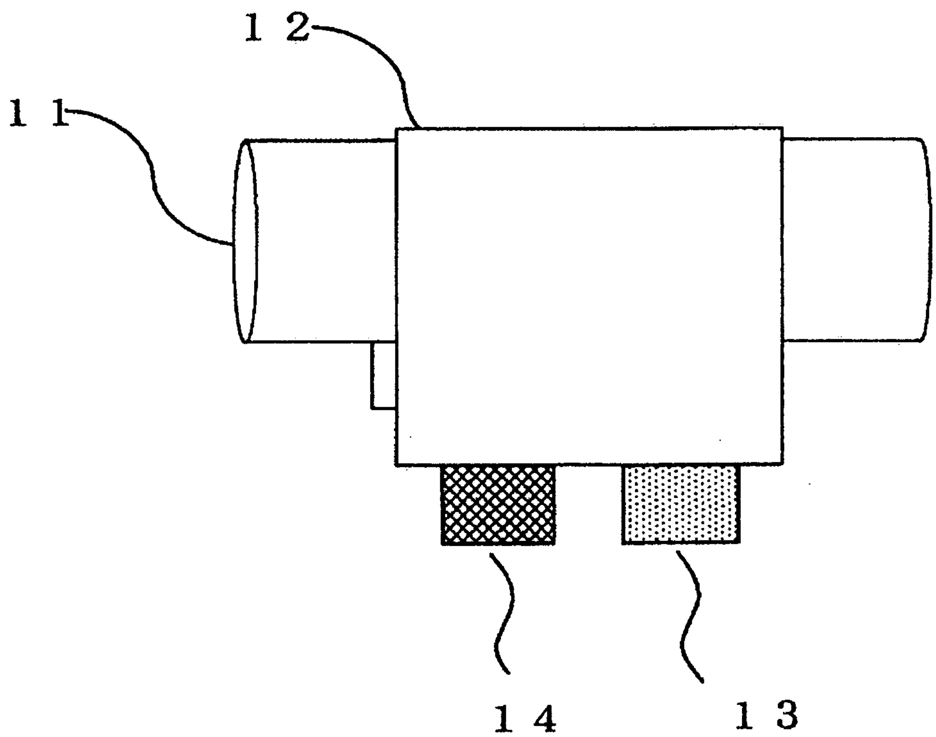

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11214038 A
- JP 2006134817 A
- JP 2002158039 A